# EUROPÄISCHE PATENTSCHRIFT

(11) **EP 0 885 895 B1**
(45) Veröffentlichungstag und Bekanntmachung des Hinweises auf die Patenterteilung: **07.11.2001**
(21) Anmeldenummer: 98108334.8
(22) Anmeldetag: 06.05.1998
(51) Int. Cl.: C07F 7/18, C08G 77/26

(54) **N-[omega-(Methyl),omega-(Silyl)]alkyl-N-organocarboxamide, oligomere sowie polykondensierte Si-haltige Verbindungen daraus, Verfahren zu deren Herstellung sowie deren Anwendung**
N-[omega-(methyl),omega-(silyl)]alkyl-N-organocarboxamide, their oligomers and polycondensates, process for their preparation and their use
N-[oméga-(méthyle), oméga-(silyle)]alkyle-N-organocarboxamides, oligomères et polycondensats, procédé e préparation et leur emploi

(30) Priorität: 17.06.1997 DE 19725516; 30.09.1997 DE 19742974
(43) Veröffentlichungstag der Anmeldung: 23.12.1998
(73) Patentinhaber: Degussa AG, 40474 Düsseldorf (DE)
(72) Erfinder: Jenkner, Peter, Dr., 79618 Rheinfelden (DE); Frings, Albert, Dr., 79618 Rheinfelden (DE); Horn, Michael, Dr., 79618 Rheinfelden (DE); Monkiewicz, Jaroslaw, Dr., 79618 Rheinfelden (DE); Standke, Burkhard, Dr., 79540 Lörrach (DE)

(56) Entgegenhaltungen:
- EP-A- 0 392 509
- EP-A- 0 450 900
- US-A- 5 220 033
- CHEMICAL ABSTRACTS, vol. 103, no. 7, 19. August 1985 Columbus, Ohio, US; abstract no. 54137, T.G.SHCHEKINA ET AL.: "Synthesis and pharmacological effect of [.alpha.-(2-oxopyrrolidino)ethyl]triethoxy silane" XP002111807 & KHIM.-FARM. ZH.,, Bd. 19, Nr. 2, 1985, Seiten 165-167,

## Beschreibung

Die vorliegende Erfindung betrifft N-[ω-(Methyl),ω-(Silyl)]alkyl-N-organocarboxamide, oligomere oder polykondensierte Si-haltige Verbindungen daraus oder Gemische aus den entsprechenden monomeren, oligomeren sowie polykondensierten Si-haltigen Verbindungen einschließlich deren Verwendung als Haftvermittler sowie für die Beschichtung von Oberflächen.

Ferner betrifft die Erfindung zum einen ein Verfahren zur Herstellung von N-[ω-(Methyl),ω-(Silyl)]alkyl-N-organocarboxamiden durch eine Hydrosilylierungsreaktion in Gegenwart eines Rhodium-haltigen Katalysators, zum anderen ein Verfahren zur Herstellung oligomerer oder polykondensierter Sihaltiger Verbindungen oder Gemische daraus, ausgehend von N-[ω-(Methyl),ω-(Silyl)]alkyl-N-organocarboxamiden.

Die Beschreibung des Einsatzes von monomeren sowie polykondensierten N-(Alkoxysilyl)organocarboxamiden mit zwischen Stickstoff der Carboxamidgruppe und Silicium der Silylgruppe insertierten Alkylen-, Alkarylen-, Aralkylen-, Cycloalkylen- oder Arylengruppen beschränkte sich bisher auf wenige Arbeiten. Die genannten Kohlenwasserstoffgruppen liegen hierbei, abgesehen von Alkarylen- und Aralkylengruppen, vorwiegend als α,ω-substituierte Spezies vor.

Bekannte Anwendungen für solche Organosilylcarboxamide sind beispielsweise die Verwendung als Katalysatoren zur Herstellung von Dialkylcarbonaten aus Alkanolen (EP 0 428 802 A1), der Einsatz als Haftvermittler oder für die Beschichtung von Oberflächen (DE-PS 22 54 117) oder als Additive in RTV-Siliconmassen (US 4 695 603). Hingegen finden direkt am Stickstoff der Acetamidogruppe silylsubstituierte Mono- und Di-(N-methylacetamido)silane beispielsweise für die Endgruppenmodifizierung von hydroxyterminierten Polydimethylsiloxanen Anwendung (US 5 373 079) oder werden als radikalische Härter in feuchtigkeitsvernetzenden, drucksensitiven, siliconbasierenden Klebesystemen (US 5 508 360) eingesetzt.

Cyclische N-ω-(Alkoxysilyl)organocarboxamide mit unverzweigter Alkylgruppe zwischen Stickstoff und Silicium wurden durch Hydrosilylierung von cyclischen ω-Alkenylcarboxamiden und Hydrogensilanen in Gegenwart eines Pt-Katalysators erhalten, beispielsweise durch Hydrosilylierung von N-Allylpyrrolidon-2 mit einem Hydrogensilan des Typs HSiR'ₙ(OR)₃₋ₙ, wobei R und R' Kohlenwasserstoffgruppen darstellen und n gleich 1, 2 oder 3 ist (EP 0 392 509 B1).

Die Hydrosilylierung von cyclischen ω-Alkenylcarboxamiden kann auch mit Si-H-funkionellen Polysiloxanen erfolgen (EP 0 450 900 A1). Solcherart modifizierte Siloxane werden zur Behandlung von Glasfasern als Schaumstabilisatoren oder als Additive für Kosmetika eingesetzt.

Ein weiterer Syntheseweg für die Bereitstellung von cyclischen silylsubstituierten Carboxamiden eröffnet sich durch die Amidoalkylierung von N-(Chlormethyl)amiden mit N-(Trimethylsilyl)aminen oder -amiden (N. A. Anisimova et al., Zh. Obshch. Khim. 53 (5) (1983), 1198 - 1199).

Ein cyclisches N-1-(Alkoxysilyl)organocarboxamid mit verzweigter Alkylgruppe zwischen dem Stickstoff des Carboxamids und dem Silicium der Silyl-Gruppe, N-1-(Triethoxysilyl)ethylpyrrolidon-2, wurde durch Hydrosilylierung von N-Vinylpyrrolidon-2 mit Triethoxysilan in Gegenwart eines Rhodium-Komplexkatalysators in Tetrahydrofuran mit einer Ausbeute von 72,6 % erhalten und auf seine pharmakologischen Eigenschaften hin getestet (T. G. Shchekina et al., Khim.-Farm Zh., 19 (2) (1985), 165 - 167; CA Vol. 103 (1985), 54137p).

Ferner sind Synthesen von monomeren und oligomeren Methylsilyl-Lactamstrukturen, ausgehend von [Chlor(methyl)]methyl/chlorsilanen (A. I. Albanov et al., Zh. Obshch. Khim. 52 (1) (1983), 246 - 248) bzw. [Chlor(methyl)]methyl/methoxysilanen (L. M. Khananashvili et al., Zh. Obshch. Khim. 52 (9) (1982), 2095 - 2097) bekannt. Allgemein sind heutzutage Synthesewege mit einem möglichst geringen Anteil chlorhaltiger Einsatzstoffe gefragt.

In vielen Produkten ist ein möglichst geringer Chloridgehalt erwünscht. Erhöhte Chloridgehalte können das Hydrolyseverhalten sowie die Lagerstabilität von Organosilanen bzw. Organosiloxanen negativ beeinflussen. Zusätzlich sind in vielen möglichen Anwendungsbereichen, z. B. Träger bzw. Bauteile für elektronische Schaltungen, bereits schon geringe Chloridgehalte unerwünscht, so daß beispielsweise solche gemäß DE-PS 22 54 117 erhältlichen Produkte heute nur bedingt für solche Anwendungen von kommerziellem Interesse sind.

DE-PS 22 54 117 offenbart, β-Chlorethylalkoxysilane zu hydrolysieren und das erhaltene Siloxan mit einem Alkylamin oder anderen Substitutionsprodukten des Ammoniaks umzusetzen.

Ein Nachteil vieler Organopolysiloxane ist auch ihre relativ schlechte Löslichkeit, insbesondere in Wasser.

Der vorliegenden Erfindung lag die Aufgabe zugrunde, N-[ω-(Methyl),ω-(Silyl)]alkyl-N-organocarboxamide sowie gegebenenfalls polykondensierte Si-haltige Verbindungen daraus in einfacher und wirtschaftlicher Weise zugänglich zu machen. Ein besonderes Anliegen war es, hierbei den Anteil chlorhaltiger Einsatzstoffe möglichst gering zu halten.

Die gestellte Aufgabe wird erfindungsgemäß entsprechend den Angaben der Patentansprüche gelöst.

Es wurde nun überraschenderweise gefunden, daß N-[ω-(Methyl),ω-(Silyl)]alkyl-N-organocarboxamide der allgemeinen Formel I 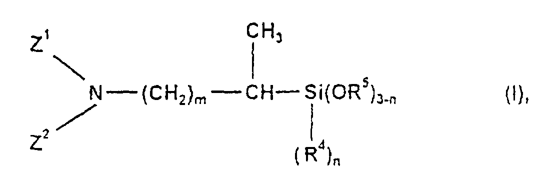 worin
- Z¹: für 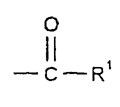 steht,
- Z²: gleich R² oder 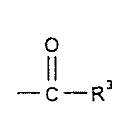 ist oder
- Z¹ und Z²: zu einem Cyclus der nachfolgenden Formel 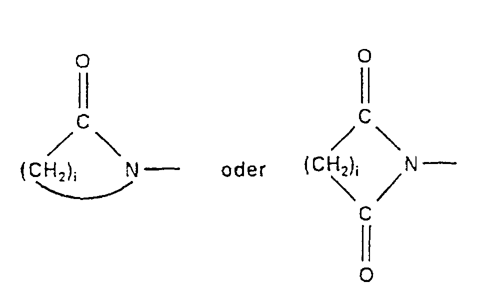 oder 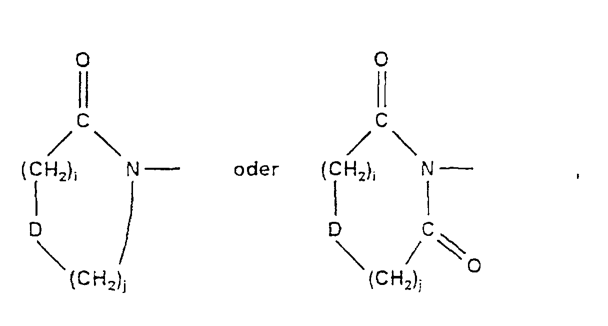 wobei D für eine HN-,O-, S-, SO- oder SO₂-Gruppe steht, i sowie j gleich oder verschieden sind und einen ganzzahligen Wert von 0 bis 7 darstellen,
verbrückt sind und die Ringgröße im Cyclus ≤ 9 ist,
- R¹, R², R³, R⁴, R⁵: gleich oder verschieden sind und jeweils ein Wasserstoffatom oder eine lineare, verzweigte oder cyclische Alkyl-Gruppe mit 1 bis 8 C-Atomen oder eine Aryl-Gruppe mit 6 bis 10 C-Atomen bedeuten und R⁵ sowohl für ein Wasserstoffatom als auch für eine lineare, verzweigte oder cyclische Alkyl-Gruppe mit 1 bis 8 C-Atomen oder eine Aryl-Gruppe mit 6 bis 10 C-Atomen stehen kann und
- m: einen ganzzahligen Wert von 0 bis 16 und
- n: einen ganzzahligen Wert von 0 bis 3 darstellen,
durch Umsetzen eines ω-Alkylencarboxamids der allgemeinen Formel IV 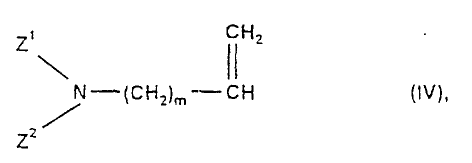
- worin: Z¹, Z², R¹, R², R³ und m die für Formel I obengenannte Bedeutung haben,
mit einem Hydrogensilan der allgemeinen Formel V 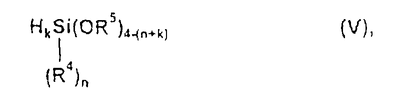
- worin: R⁴ und R⁵ die für Formel I obengenannte Bedeutung haben und
n ein ganzzahliger Wert von 0, 1, 2 oder 3,
k ein ganzzahliger Wert von 1, 2, 3 oder 4 und (n+k) ≤ 4 sind,
in Gegenwart von metallischem Rhodium auf einem Aktivkohleträger, (Ph₃P)₃Rh(CO)H, (Ph₃P)₃RhCl oder [Rh(Cyclooctadien-1,5)Cl]₂ oder einem Gemisch, das mindestens eine der zuvor genannten Rh-Komplexverbindungen und mindestens eine Pt-Komplexverbindung enthält, als Katalysator und Aufarbeiten der erhaltenen Produktmischung mit Ausbeuten bis zu 87 % in einfacher und wirtschaftlicher Weise erhältlich sind.

Es kann von Vorteil sein, wenn man mindestens eine der obengenannten Rhodium-Komplexverbindungen im Gemisch mit mindestens einer Platin-Komplexverbindung, wie z. B. (Ph₃P)₃PtCl₂ oder (Ph₃P)₄Pt oder solchen auf der Basis von Hexachloroplatinsäure, insbesondere als Aceton-, Cyclohexanon- oder i-Propanol-Komplexe, einsetzt. Vorzugsweise setzt man Pt- zu Rh-Komplexverbindungen in einem Massenverhältnis von 1 : 10 bis 5 : 1 ein.

Der erfindungsgemäße Syntheseweg zur Herstellung von N-[ω-(Methyl),ω-(Silyl)]alkyl-N-organocarboxamiden weist als weitere Vorteile kurze Reaktionszeiten, die Möglichkeit für ein kostensparendes "Eintopfverfahren" und die Vermeidung größerer Mengen von anorganischen, insbesondere von chloridhaltigen Salzen als Nebenprodukte auf.

Im allgemeinen werden bei Hydrosilylierungsreaktionen überwiegend "α-Additionsprodukte" erhalten, als Nebenprodukt können aber auch "β-Additionsprodukte" entstehen, beispielsweise:

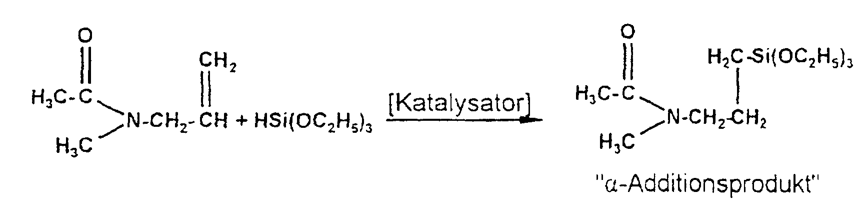

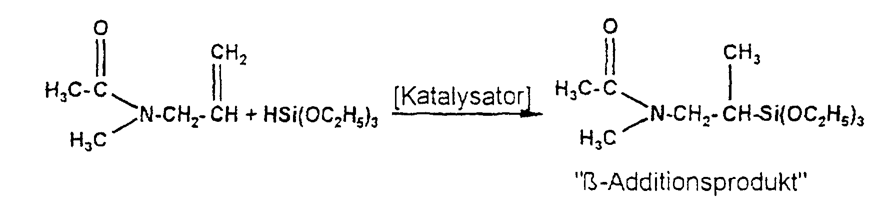

Überraschenderweise wurde bei der erfindungsgemäßen Hersteilung gefunden, daß bei der Umsetzung von ω-Alkenyl-N-organocarboxamiden mit Alkoxysilanen unter Verwendung besagter Rh-Katalysatoren oder Gemischen aus Rh- und Pt-Komplexverbindungen die Hydrosilylierung mit hoher Selektivität an der β-Position eintritt. Diese Selektivität beträgt bei erfindungsgemäßer Anwendung besagter Katalysatoren üblicherweise > 80 GC-WLD-FI.-% β-Additionsprodukt gegenüber dem isomeren α-Produkt,-wobei weitere Isomere in der Regel nur in einer Größenordnung von < GC-WLD-FI.-% auftreten. Ferner kann man eine Trennung der α-/β-Isomeren bei der Aufarbeitung der bei der Umsetzung erhaltenen Produktmischung durchführen, so daß auf diese Weise die reinen N-[ω-(Methyl),ω-(Silyl)]alkyl-N-organocarboxamide in einfacher und wirtschaftlicher Weise erhalten werden können.

Als besonders geeignetes Katalysatorsystem wurde (Ph₃P)₃Rh(CO)H gefunden. Die Aufarbeitung der beim vorliegenden Verfahren erhaltenen Produktmischung erfolgt geeigneterweise durch eine Destillation unter Normaldruck oder unter vermindertem Druck.

So kann beim vorliegenden Verfahren bei Einsatz der im wesentlichen chlorfreien Edukte auch der Anfall chlorhaltiger Reststoffe bei der Produktaufarbeitung in vorteilhafter Weise vermieden werden.

Gegenstand der vorliegenden Erfindung sind daher N-[ω-(Methyl),ω-(Silyl)]alkyl-N-organocarboxamide der allgemeinen Formel I 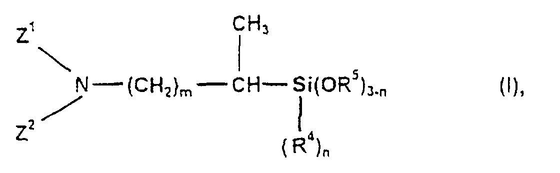
- worin: Z¹, Z², R¹, R², R³, R⁴, R⁵, m und n die für Formel I obengenannte Bedeutung haben,
ausgenommen sind nichtcyclische Verbindungen gemäß Formel I mit m gleich 1 und N-1-(Triethoxysilyl)ethylpyrrolidon-2.

Gegenstand der vorliegenden Erfindung ist somit auch ein Verfahren zur Herstellung von N-[ω-(Methyl),ω-(Silyl)]alkyl-N-organocarboxamiden der allgemeinen Formel I durch eine Hydrosilylierungsreaktion in Gegenwart eines Rhodium-haltigen Katalysators, das dadurch gekennzeichnet ist, daß man ein ω-Alkylencarboxamid der allgemeinen Formel IV 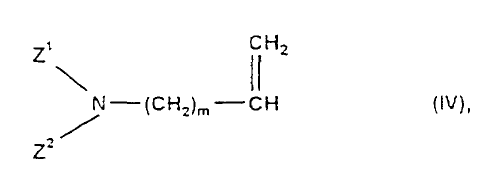
- worin: Z¹, Z², R¹, R², R³ und m die für Formel I obengenannte Bedeutung haben,
mit einem Hydrogensilan der allgemeinen Formel V 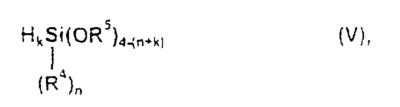
- worin: R⁴, R⁵, n, k und (n+k) die für Formel V obengenannte Bedeutung haben,
in Gegenwart von metallischem Rhodium auf einem Aktivkohleträger, (Ph₃P)₃Rh(CO)H, (Ph₃P)₃RhCl oder [Rh(Cyclooctadien-1,5)Cl] ₂oder einem Gemisch, das mindestens eine der zu vorgenannten Rh-Komplexverbindungen und mindestens eine Pt-Komplexverbindung enthält, als Katalysator umsetzt und die erhaltene Produktmischung aufarbeitet.

Als Beispiele für bevorzugte Edukte im erfindungsgemäßen Verfahren seien nachfolgend aufgeführt -
bevorzugte ω-Alkylencarboxamide gemäß allgemeiner Formel IV sind:
N-Vinylacetamid, N-Methyl-N-vinylacetamid, N-Methyl-N-vinylformamid, N-Vinylformamid, N-Allyl-2-(dimethylamino)acetamid, N-Vinylphthalimid, N-Vinyl-2-pyrrolidon, N-Vinyl-2-piperidinon, N-Vinyl-2-azocinon und N-Vinyl-2-azepinon sowie N-Vinyl-2-azoninon;
bevorzugte Hydrogensilane gemäß allgemeiner Formel V sind:
   Trimethoxysilan, Triethoxysilan, Tri-i-propoxysilan, Tri-n-propoxysilan, Tri-secbutoxysilan, Tri-i-butoxysilan, Tri-t-butoxysilan, Tri-n-butoxysilan, Tris(2-ethylbutoxy)silan, Tris(2-ethyl-hexoxy)silan, Tris(2-methoxyethoxy)silan, Methyldimethoxysilan, Methyldi-ethoxysilan, Phenyldimethoxysilan, Phenyldiethoxysilan, Methylphenyl-methoxysilan, Methylphenylethoxysilan, Dimethylmethoxysilan, Dimethyl-ethoxysilan, Methyldi-n-propoxysilan, Methyldi-i-propoxysilan, Methyidi-sec-butoxysilan, Methyldi-n-butoxysilan, Methyldi-i-butoxysilan, Methyldi-t-butoxysilan, Methyl-bis(2-methoxyethoxy)silan, Dimethyl-n-propoxysilan und Dimethyl-i-propoxysilan.

Das erfindungsgemäße Verfahren führt man im allgemeinen wie folgt aus:

In der Regel wird das Katalysatorsystem dem Edukt gemäß Formel IV zugesetzt und gerührt; geeigneterweise erfolgt dies bereits unter Schutzgas, vorzugsweise N₂. Die Vorlage kann nun erhitzt und das Edukt gemäß Formel V zugetropft werden.

Man kann aber auch das Edukt gemäß Formel V einschließlich Katalysator vorlegen und geeigneterweise nach dem Erhitzen das Edukt gemäß Formel IV zutropfen.

Beim erfindungsgemäßen Verfahren setzt man den Rhodium-haltigen Katalysator zu dem ω-Alkylencarboxamid gemäß Formel IV in einem Massenverhältnis von vorzugsweise 1: 1.000 bis 1 : 100.000, besonders bevorzugt in einem Massenverhältnis von 1 : 3.000 bis 1 : 50.000, und ganz besonders bevorzugt in einem Massenverhältnis von 1 : 5.000 bis 1 : 30.000, ein.

Beim erfindungsgemäßen Verfahren kann man die Umsetzung in Gegenwart eines inerten Kohlenwasserstoffs oder Kohlenwasserstoffgemisches durchführen. Bevorzugt wird die erfindungsgemäße Umsetzung in Toluol oder Xylol oder N-Decan durchgeführt.

Üblicherweise führt man die Umsetzung unter guter Durchmischung bei einer Temperatur im Bereich zwischen Raumtemperatur und 200 °C, vorzugsweise zwischen 80 und 200 °C, und über eine Zeit von 0,25 bis 24 Stunden durch, vorzugsweise über eine Zeit von 0,5 bis 10 Stunden.

Das erhaltene Rohprodukt wird nachfolgend aufgearbeitet, wobei die Aufarbeitung beim erfindungsgemäßen Verfahren vorzugsweise durch Destillation erfolgt.

Als Beispiele für bevorzugte Produkte gemäß allgemeiner Formel I des erfindungsgemäßen Verfahrens seien nachfolgend aufgeführt:
N-1-(Trimethoxysilyl)ethylacetamid, N-1-(Triethoxysilyl)ethylacetamid, N-1-(Trimethoxysilyl)ethyl-N-methylacetamid, N-1-(Triethoxysilyl)ethyl-N-methylacetamid, N-1-(Trimethoxysilyl)ethyl-N-methylformamid, N-1-(Triethoxysilyl)-ethylformamid, N-1-(Triethoxysilyl)ethyl-N-methylformamid, N-1-(Trimethoxysilyl)ethylformamid, N-1-(Trimethoxysilyl)ethylpyrrolidon-2, N-1-(Triethoxysilyl)ethylpyrrolidon-2, N-1-(Methyldimethoxysilyl)ethyl-N-methylacetamid, N-1-(Dimethylmethoxysilyl)ethyl-N-methylacetamid, N-1-(Tri-i-propoxysilyl)ethylacetamid, N-1-(Tri-i-propoxysilyl)ethyl-N-methylacetamid, N-1-(Tri-i-propoxysilyl)ethylpyrrolidon-2, N-1-(Methyldimethoxysilyl)-ethylpiperidinon-2, N-1-(Triethoxysilyl)ethylazepinon-2, N-1-(Tris(2-methoxyethoxy)silyl)ethyl-N-methylacetamid, N-1-(Methyldiethoxysilyl)ethyl-N-methylacetamid, N-1-(Methyldimethoxysilyl)ethylpyrrolidon-2, N-1-(Methyldiethoxysilyl)ethylpyrrolidon-2.

Im allgemeinen sind die erfindungsgemäßen Verbindungen gemäß Formel I in inerten organischen Lösemitteln, wie z. B. Cyclohexan, Heptan oder Toluol, gut löslich und aus solchen Lösungen durch z. B. Tauchen, Streichen oder Sprühen auf unterschiedliche Substratoberflächen auftragbar. Besonders vorteilhaft können N-[ω-(Methyl),ω-(Silyl)]alkyl-N-organocarboxamide der allgemeinen Formel I als Haftvermittler bei der Beschichtung von anorganischen Substraten, vorzugsweise Metalle, wie Kupfer, Eisen oder Silber, oder Glas gegenüber Polyamiden, Polyimiden, Epoxidharzen oder Polyurethanen eingesetzt werden.

Insbesondere sind die erfindungsgemäßen Verbindungen gemäß Formel I, vorzugsweise säure- oder basenkatalysiert, unter gleichzeitiger Hydrolyse zu den entsprechenden Silanolen und parallel dazu einsetzender Oligomerisierung auch gut in Wasser löslich. Geeigneterweise liegt hierbei der Oligomerisierungsgrad unterhalb 50, vorzugsweise von 2 bis 20. Somit können die wäßrigen Wirkstofflösungen, die man geeigneterweise in einem Konzentrationsbereich von 0,01 bis 50 Gew.-%, vorzugsweise von 0,05 bis 15 Gew.-%, besonders bevorzugt von 0,1 bis 5 Gew-%, einsetzt, rasch und einfach hergestellt werden und ebenfalls durch z. B. Tauchen, Streichen oder Sprühen auf die gewünschte Substratoberfläche aufgebracht werden. Unter Verwendung besagter Wirkstoffe kann die Oberflächenbelegung von verschiedensten Substraten verbessert werden. Durch den teilweisen Ersatz des Wassers durch einen Alkohol, z. B. Methanol, Ethanol oder Isopropanol, kann nach Maßgabe der Oberflächenenergie des zu behandelnden Substrats auch die Benetzbarkeit angepaßt werden. Durch Auftrag, gegebenenfalls mittels Rakel, von wäßrigen Lösungen, vorzugsweise mit Wirkstoffkonzentrationen zwischen 0,05 bis 15 Gew.-%, auf Glas oder Metalle können klare, elastische, feuchteresistente, keramische Filme, die zudem eine hohe Kratzfestigkeit aufweisen, zum Schutz sowie zur Modifizierung der optischen Eigenschaften der jeweiligen Substrate hergestellt werden.

Bevorzugte Verbindungen der allgemeinen Formel I, wie sie insbesondere in Hydrolysaten sowie in wäßrigen oder lösemittelhaltigen Gemischen daraus enthalten sein können, sind aber auch folgende Si-haltige Verbindungen:
N-1-(Trimethoxysilyl)ethyl-N-methylformamid, N-1-(Triethoxysilyl)-ethylformamid, N-1-(Triethoxysilyl)ethyl-N-methylformamid, N-1-(Trimethoxysilyl)ethylformamid, N-1-(Trimethoxysilyl)ethylacetamid, N-1-(Triethoxysilyl)ethylacetamid, N-1-(Trimethoxysilyl)ethyl-N-methylacetamid, N-1-(Triethoxysilyl)ethyl-N-methylacetamid, N-1-(Trimethoxysilyl)ethylpyrrolidon-2, N-1-(Triethoxysilyl)ethylpyrrolidon-2, N-1-(Methyldimethoxysilyl)ethyl-N-methylacetamid, N-1-(Dimethylmethoxysilyl)ethyl-N-methylacetamid, N-1-(Tri-i-propoxysilyl)ethylacetamid, N-1-(Tri-i-propoxysilyl)ethyl-N-methylacetamid, N-1-(Tri-i-propoxysilyl)ethylpyrrolidon-2, N-1-(Methyldimethoxysilyl)-ethylpiperidinon-2, N-1-(Triethoxysilyl)ethylazepinon-2, N-1-(Tris(2-methoxyethoxy)silyl)ethyl-N-methylacetamid, N-1-(Methyldiethoxysilyl)ethyl-N-methylacetamid, N-1-(Methyldimethoxysilyl)ethylpyrrolidon-2, N-1-(Methyldiethoxysilyl)ethylpyrrolidon-2, N-1-(Trihydroxysilyl)ethyl-N-methylformamid, N-1-(Dihydroxymethoxysilyl)ethyl-N-methylformamid, N-1-(Hydroxydimethoxysilyl)ethyl-N-methylformamid, N-1-(Diethoxyhydroxysilyl)ethyl-N-methylformamid, N-1-(Ethoxydihydroxysilyl)ethyl-N-methylformamid, N-1-(Trihydroxy-silyl)ethyl-N-methylacetamid, N-1-(Dihydroxymethoxysilyl)ethyl-N-methyl-acetamid, N-1-(Hydroxydimethoxysilyl)ethyl-N-methylacetamid, N-1-(Diethoxy-hydroxysilyl)ethyl-N-methylacetamid, (Ethoxydihydroxysilyl)ethyl-N-methyl-acetamid, N-1-(Trihydroxysilyl)ethylpyrrolidon-2, N-1-(Di-hydroxymethoxysilyl)-ethylpyrrolidon-2, N-1-(Dihydroxyethoxysilyl)ethylpyrrolidon-2, N-1-(Hydroxy-diethoxysilyl)ethylpyrrolidon-2, N-1-(Hydroxydimethoxysilyl)ethylpyrrolidon-2, N-1-(Dihydroxy-i-propoxysilyl)ethylpyrrolidon-2, N-1-(Hydroxydi-i-propoxy-silyl)ethylpyrrolidon-2, N-1-(Methyldihydroxysilyl)ethyl-N-methylacetamid, N-1-(Methylhydroxymethoxysilyl)ethyl-N-methylacetamid, N-1-(Methylhydroxy-ethoxysilyl)ethyl-N-methylacetamid, N-1-(Dimethylhydroxysilyl)ethyl-N-methylacetamid, N-1-(Methyldihydroxysilyl)ethylpiperidinon-2, N-1-(Methyl-ethoxyhydroxysilyl)ethylpiperidinon-2, N-1-(Trihydroxysilyl)ethylazepinon-2, N-1-(Dihydroxyethoxysilyl)ethylazepinon-2, N-1-(Hydroxydiethoxysilyl)-ethylazepinon-2, N-1-(Methyldihydroxysilyl)ethylpyrrolidon-2, N-1-(Methylhydroxymethoxysilyl)ethylpyrrolidon-2, N-1-(Methylhydroxyethoxysilyl)ethylpyrrolidon-2.

Darüber hinaus wurde gefunden, daß Oligomere Si-haltige Verbindungen der allgemeinen Formel II 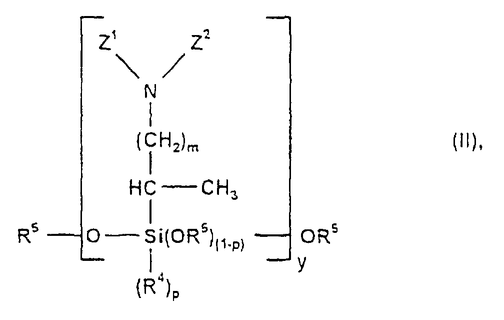 worin
- Z¹: für 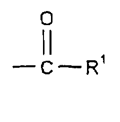 steht,
- Z²: gleich R² oder 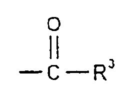 ist oder
- Z¹ und Z²: zu einem Cyclus der nachfolgenden Formel 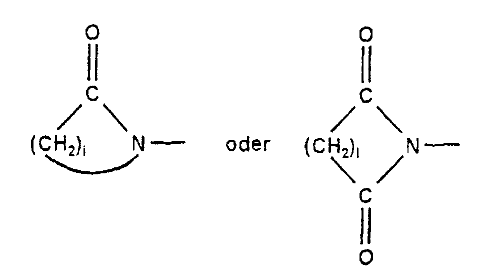 oder 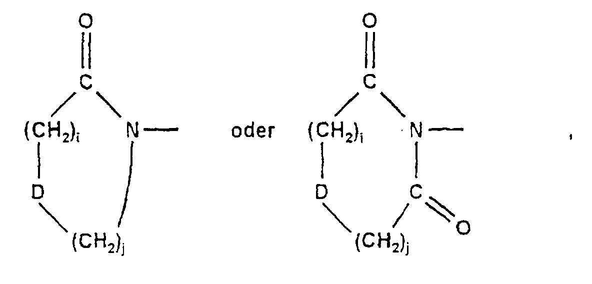 wobei D für eine HN-, O-, S-, SO- oder SO₂-Gruppe steht, i sowie j gleich oder verschieden sind und einen ganzzahligen Wert von 0 bis 7 darstellen,
verbrückt sind und die Ringgröße im Cyclus 9 ist,
- R¹, R², R³, R⁴, R⁵: gleich oder verschieden sind und jeweils ein Wasserstoffatom oder eine lineare, verzweigte oder cyclische Alkyl-Gruppe mit 1 bis 8 C-Atomen oder eine Aryl-Gruppe mit 6 bis 10 C-Atomen bedeuten und R⁵ sowohl für ein Wasserstoffatom als auch für eine lineare, verzweigte oder cyclische Alkyl-Gruppe mit 1 bis 8 C-Atomen oder eine Aryl-Gruppe mit 6 bis 10 C-Atomen stehen kann,
- m: einen ganzzahligen Wert von 0 bis 16,
- p: einen ganzzahligen Wert von 0 oder 1 und
- y: einen ganzzahligen Wert von 2 bis 50, vorzugsweise von 2 bis 20, annimmt,
oder polykondensierte Si-haltige Verbindungen der allgemeinen Formel III 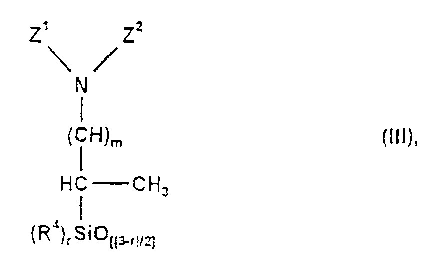 worin
- Z¹: für 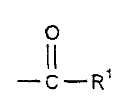 steht,
- Z²: gleich R² oder 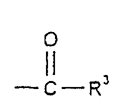 ist oder
- Z¹ und Z²: zu einem Cyclus der nachfolgenden Formel 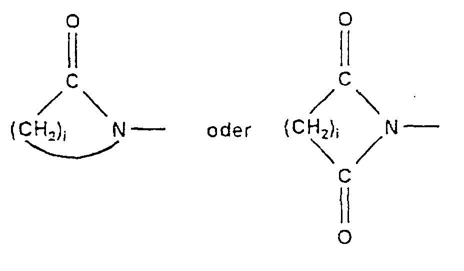 oder 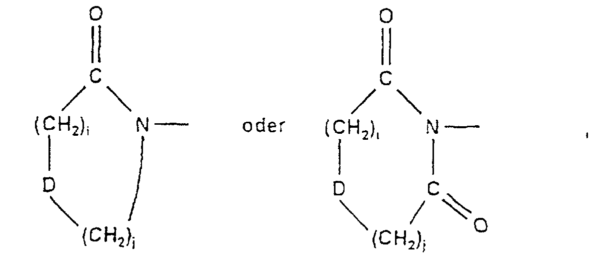 wobei D für eine HN-, O-, S-, SO- oder SO₂-Gruppe steht, i sowie j gleich oder verschieden sind und einen ganzzahligen Wert von 0 bis 7 darstellen,
verbrückt sind und die Ringgröße im Cyclus ≤ 9 ist,
- R¹, R², R³, R⁴: gleich oder verschieden sind und jeweils für ein Wasserstoffatom oder eine lineare, verzweigte oder cyclische Alkyl-Gruppe mit 1 bis 8 C-Atomen oder eine Aryl-Gruppe mit 6 bis 10 C-Atomen stehen,
- m: einen ganzzahligen Wert von 0 bis 16 und
- r: einen ganzzahligen Wert von 0 oder 1 annimmt,
oder Gemische, die Si-haltige Verbindungen der allgemeinen Formeln I, II und/oder III enthalten,
durch kontrollierte Hydrolyse mindestens eines N-[ω-(Methyl),ω-(Silyl)]alkyl-N-organocarboxamids der allgemeinen Formel I 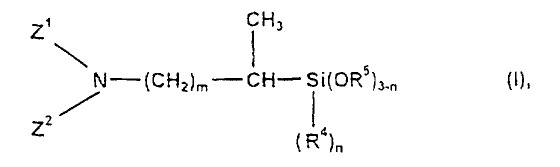
- worin: Z¹, Z², R¹, R², R³, R⁴, R⁵, m und n die für Formel I obengenannte Bedeutung haben
in Wasser oder einem Alkohol/Wassergemisch,
worin Alkohol : Wasser in einem Massenverhältnis von 1 : 100 bis 100 : 1, vorzugsweise von 70 : 30 bis 90 : 10, vorliegen und das Wasser oder das Alkohol/Wassergemisch durch Zugabe einer anorganischen oder organischen Säure oder eines sauren Salzes auf einen pH-Wert < 7 oder durch Zugabe einer Base oder eines basischen Salzes auf einen pH-Wert > eingestellt wird,
wobei die Verbindung(en) gemäß Formel I zu Wasser in einem Massenverhältnis von 0,1 : 99,9 bis 99,99 : 0,01, vorzugsweise von 2 : 98 bis 90 : 10, eingesetzt werden, ebenfalls in einfacher und wirtschaftlicher Weise erhältlich sind.

Ein besonderer Vorteil der erfindungsgemäßen Si-haltigen Verbindungen gemäß der Formeln II oder III oder Mischungen sowie Zubereitungen daraus, wobei diese auch monomere gemäß Formel I bzw. entsprechende Silanole enthalten können, besteht des weiteren in ihrer hervorragenden Lagerstabilität, insbesondere solcher Zubereitungen auf Wasser- und/oder Alkohol-Basis.

Gegenstand der vorliegenden Erfindung sind somit auch oligomere Si-haltige Verbindungen der allgemeinen Formel II 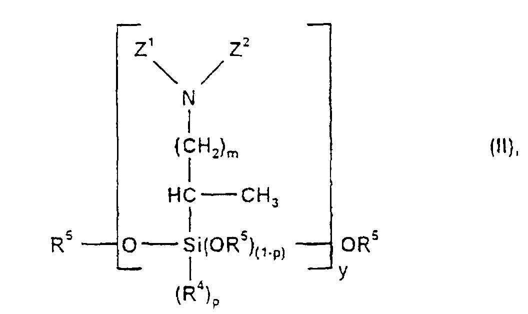
- worin: Z¹, Z², R¹, R², R³, R⁴, R⁵, m, p und y die für Formel II obengenannte Bedeutung haben,
sowie polykondensierte Si-haltige Verbindungen der allgemeinen Formel III 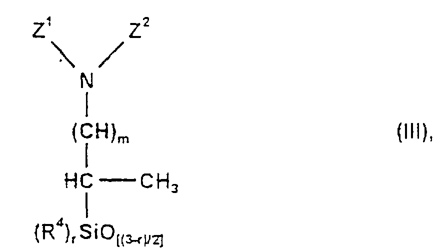
- worin: Z¹, Z², R¹, R², R³, R⁴, m und r die für Formel III obengenannte Bedeutung haben,
ausgenommen sind hinsichtlich Z¹ und Z² nichtcyclische Verbindungen gemäß Formel III mit m gleich 1.

Ferner ist Gegenstand der vorliegenden Erfindung ein Verfahren zur Herstellung von Si-haltigen Verbindungen der allgemeinen Formeln II oder III oder einem Gemisch, das Si-haltige Verbindungen der allgemeinen Formeln I, II und/oder III enthält, und das dadurch gekennzeichnet ist, daß man mindestens ein N-[ω-(Methyl),ω-(Silyl)]alkyl-N-organocarboxamid der allgemeinen Formel I 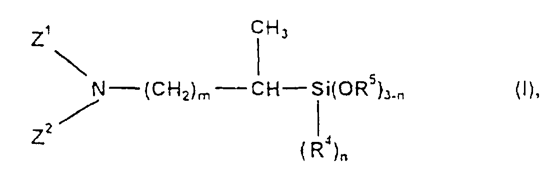
- worin: Z¹, Z², R¹, R², R³, R⁴, R⁵, m und n die für Formel obengenannte Bedeutung haben,
in Wasser oder einem Alkohol/Wassergemisch,
worin Alkohol : Wasser in einem Massenverhältnis von 1 : 100 bis 100 : 1, vorzugsweise von 70 : 30 bis 90 : 10, vorliegen und das Wasser oder das Alkohol/Wassergemisch durch Zugabe einer anorganischen oder organischen Säure oder eines sauren Salzes auf einen pH-Wert < 7 oder durch Zugabe einer Base oder eines basischen Salzes auf einen pH-Wert > 7 eingestellt wird,
und die Verbindung(en) gemäß Formel I zu Wasser in einem Massenverhältnis von 0,1 : 99,9 bis 99,99 : 0,01, vorzugsweise von 2 : 98 bis 90 : 10, eingesetzt wird (werden),
kontrolliert hydrolysiert.

Im allgemeinen verfährt man beim erfindungsgemäßen Hydrolyseverfahren so, daß man Wasser oder ein Alkohol/Wassergemisch vorlegt und durch Zugabe einer Säure oder Base den pH-Wert auf einen Wert ≥ 1 und < 7 oder > 7 und < 12 einstellt.

Geeigneterweise verwendet man beim erfindungsgemäßen Hydrolyseverfahren Ameisensäure, Essigsäure, Zitronensäure, Natriumacetat oder Natriumformiat zum Einstellen des pH-Wertes; man kann hierzu aber auch wäßrige Lösungen von Chlorwasserstoff oder Natriumhydroxid verwenden.

Vorzugsweise verwendet man beim erfindungsgemäßen Hydrolyseverfahren einen Alkohol oder ein Alkoholgemisch, wobei mindestens einer der Alkohole mit mindestens einer Alkoxygruppierung der eingesetzten Verbindung gemäß Formel 1 korrespondiert, besonders bevorzugt setzt man Methanol, Ethanol, n-Propanol, i-Propanol, n-Butanol, i-Butanol, sec.-Butanol, t-Butanol, 2-Methoxyethanol oder 2-Ethylhexanol ein.

Insbesondere stellt man beim erfindungsgemäßen Hydrolyseverfahren den pH-Wert des Wassers oder des Alkohol/Wassergemisches auf einen Wert von ≥ 2 und ≤ 6 ein und führt die Hydrolyse im pH-Wertebereich von ≥ 2 und ≤ 6 durch. Vorzugsweise setzt man erfindungsgemäß die Verbindung(en) gemäß Formel I zu Wasser in einem Massenverhältnis von 2 : 98 bis 90 : 10 ein. Bevorzugte Beispiele für Verbindungen der allgemeinen Formel I wurden bereits oben aufgezeigt.

Im allgemeinen gibt man besagte Verbindungen gemäß Formel I, vorzugsweise wohldosiert in kleinen Portionen, unter Rühren in die zuvor bereitete Lösung. Man kann aber auch das N-[ω-(Methyl),ω-(Silyl)]alkyl-N-organocarboxamid gemäß Formel I vorlegen und Wasser oder ein Alkohol/Wassergemisch zusetzen, wobei man geeigneterweise für eine gute Durchmischung sorgt.

Die Hydrolyse kann bei einer Temperatur von 0 bis 100 °C, vorzugsweise von 25 bis 80 °C durchgeführt werden. So erhaltene Wirkstofflösungen können darüber hinaus durch destillative Maßnahmen auf Alkoholgehalte von 0,01 bis 90 Gew.-%, vorzugsweise von 0,5 bis 50 Gew.-%, eingestellt werden. Besonders hierfür geeignete Alkohole sind Methanol, Ethanol und i-Propanol.

Beispiele bevorzugter Verbindungen nach den allgemeinen Formeln II sowie III können im allgemeinen - wie nachfolgend aufgeführt - bezeichnet werden:

Bevorzugte Verbindungen gemäß allgemeiner Formel II sind:
n-{α,ω-Diethoxyoligo[(1-(2-pyrrolidonyl)ethylethoxy)siloxan]}, cyclo-{α,ω-Di-ethoxyoligo[(1-(2-pyrrolidonyl)ethylethoxy)siloxan]}, n-{α,ω-Diethoxyoligo[(1-(N-methylacetamido)ethylethoxy)siloxan]}, cyclo-{α,ω-Diethoxyoligo[(1-(N-methylacetamido)ethylethoxy)siloxan]} sowie entsprechende Partialhydrolysate sowie n-{α,ω-Dihydroxyoligo[(1-(N-methylacetamido)ethylhydroxy)siloxan]}, n-{α,ω-Dihydroxyoligo[(1-(2-pyrrolidonyl)-ethylhydroxy)siloxan)}, cyclo-{α,ω-Dihydroxyoligo[(1-(2-pyrrolidonyl)-ethylhydroxy)siloxan]}, cyclo-{α,ω-Dihydroxyoligo[(1-(N-methylacetamido)ethylhydroxy)siloxan]} sowie Gemische daraus.

Bevorzugte Verbindungen gemäß allgemeiner Formel III sind:
[1-(2-Pyrrolidonyl)ethyl]-substituierte sowie [1-(N-methylacetamido)ethyl]-substituierte D-, D/T- sowie T-Oligo- und Polysilsesquioxane sowie Poly[(1-(2-pyrrolidonyl)ethyl)siloxan] und Poly[(1-(N-methylacetamido)ethyl)siloxan].

Gegenstand der vorliegenden Erfindung ist ferner die Verwendung der monomeren, oligomeren oder polykondensierten Si-haltigen Verbindungen oder deren Gemisch nach den Ansprüchen 1 bis 19, vorzugsweise in Form wäßriger oder alkoholhaltiger Lösungen, als Haftvermittler zwischen anorganischen, z. B. Glas, Metallen, Metalloxiden, festen Metallhydroxiden, Keramik, Sandstein, Beton, Ziegel, Tonen, Kaolin, Cristobalit oder Wollastonit, und/oder organischen Stoffen, z. B. Epoxidharzen, Polyestern, Polyurethanen, Polyamiden, Zellulose, Holz, Papier, Pappe, Polyolefinen, und darüber hinaus auch in hervorragender Weise zur Herstellung von kratzfesten und elastischen Beschichtungen zur Oberflächenmodifizierung besagter anorganischer oder organischer Stoffe.

Die Erfindung wird durch die nachfolgenden Beispiele näher erläutert, ohne die Gegenstände der vorliegenden Erfindung zu beschränken.

### Beispiel 1

In einem 2-l-Doppelmantelglaskolben werden unter Rühren 605 mg (0,66 mmol, Verhältnis 1 : 5.700 gegenüber den Edukten) Tris(triphenylphosphin)rhodium(I)-carbonylhydrid zu 373 g (3,76 mol) N-Methyl-N-vinylacetamid gegeben und zum Sieden (160 °C Sumpftemperatur) erhitzt. Dazu tropft man über 4 Stunden 615 g (3,76 mol) Triethoxysilan, wobei sich die Reaktionsmischung durch die auftretende Exothermie bis auf 180 °C erhitzt und eine leichte Gelbfärbung auftritt. Der Fortgang der Umsetzung wird über GC analytisch verfolgt. Danach läßt man noch eine Stunde bei gleicher Temperatur nachreagieren, kühlt ab und überführt in einer Kurzweg-Destillationsapparatur (Vigreux, ohne Kolonnenschuß). Nach destillativer Reinigung erhält man 865 g (3,28 mol) des Zielprodukts N-1-(Triethoxysilyl)ethyl-N-methylacetamid, entsprechend einer Ausbeute von 87 Gew.-% bezüglich der Edukte.

### Beispiel 2

In einem 1-l-Doppeimantelglaskolben werden unter Rühren 200 mg (0,22 mmol; Verhältnis 1 : 5.700 gegenüber den Edukten) Tris(triphenylphosphin)rhodium(l)-carbonylhydrid zu 187 g (1,88 mol) N-Methyl-N-vinylacetamid gegeben und auf 110 °C (Sumpftemperatur) erhitzt. Dazu tropft man über 3,5 Stunden 230 g (1,88 mol) Trimethoxysilan, wobei sich die Reaktionsmischung unter Gelbfärbung durch die auftretende Exothermie bis auf 165 °C erhitzt. Der Fortgang der Umsetzung wird über GC analytisch verfolgt. Danach läßt man noch 2,5 Stunden bei gleicher Temperatur nachreagieren, kühlt ab und überführt in eine Kurzweg-Destillationsapparatur (Vigreux, ohne Kolonnenschuß). Nach destillativer Reinigung erhält man 325 g (1,47 mol) des Zielprodukts N-1-(Trimethoxysilyl)ethyl-N-methylacetamid, entsprechend einer Ausbeute von 78 Gew.-% bezüglich der Edukte.

### Beispiel 3

0,8 Gewichtsteile N-1-(Triethoxysilyl)ethyl-N-methylacetamid werden in 96 Gewichtsteilen Ethanol vorgelegt und unter Rühren 3,2 Gewichtsteile destilliertes H₂O, das zuvor mit CH₃COOH auf einen pH-Wert von 3,0 (Messung über pH-Sticks) eingestellt wurde, zugegeben. Man läßt noch weitere 5 Stunden Rühren, bis über GC kein monomeres N-1-(Triethoxysilyl)ethyl-N-methylacetamid mehr detektierbar ist. Danach ist die erhaltene Lösung klar, farblos und anwendungsfähig.
Die Lagerstabilität der alkoholischen Oligosiloxanlösung beträgt > 3 Monate.

### Beispiel 4

in einem 500-ml-Doppelmantelglaskolben werden unter Rühren 50 mg (0,1 mmol; Verhältnis 1 : 5.000 gegenüber den Edukten) [Rh(Cyclooctadien-1,5)Cl]₂ zu 55,6 g (0,5 mol) N-Vinylpyrrolidon-2 gegeben und zum Sieden (149 °C Sumpftemperatur) erhitzt. Dazu tropft man über 0,5 Stunden 82,1 g (0,5 mol) Triethoxysilan, wobei sich die Reaktionsmischung unter leichter Gelbfärbung durch die auftretende Exothermie bis auf 170 °C erhitzt. Der Fortgang der Umsetzung wird über GC analytisch verfolgt. Danach läßt man noch 1,5 Stunden bei gleicher Temperatur nachreagieren, kühlt ab und überführt in eine Kurzweg-Destillationsapparatur (Vigreux, ohne Kolonnenschuß). Nach destillativer Reinigung erhält man 109 g (0,40 mol) des Zielproduktes N-1-(Triethoxysilyl)ethylpyrrolidon-2, entsprechend einer Ausbeute von 79 Gew.-% bezüglich der Edukte.

### Beispiel 5

In einem 500-ml-Laborstahlautoklav werden 10 mg (0,02 mmol; Verhältnis 1 : 25.000 gegenüber den Edukten) [Rh(Cyclooctadien-1,5)CI]₂ und 55,6 g (0,5 mol) N-Vinylpyrrolidon-2 zusammen mit 82,1 g (0,5 mol) Triethoxysilan vorgelegt und unter Rühren auf 160 °C erhitzt. Man läßt 1 Stunde reagieren, wobei sich die Innentemperatur des Reaktors durch die auftretende Exothermie auf 172 °C erhitzt. Der während der Reaktion gemessene Druck beträgt 1,0 bis 2,0 bar. Danach läßt man unter Rühren über ca. 1 Stunde abkühlen und überführt die Reaktionsmischung in eine Kurzweg-Destillationsapparatur (Vigreux, ohne Kolonnenschuß). Nach destillativer Reinigung erhält man 106 g (0,38 mol) des Zielproduktes N-1-(Triethoxysilyl)ethylpyrrolidon-2, entsprechend einer Ausbeute von 77 Gew.-% bezüglich der Edukte.

### Beispiel 6

In einem 500-ml-Laborstahlautoklav werden 10 mg (0,02 mmol; Verhältnis 1 : 25.000 gegenüber eingesetztem Vinylpyrrolidon-2) [Rh(Cyclooctadien-1,5)Cl]₂ und 55,6 g (0,5 mol) N-Vinylpyrrolidon-2 zusammen mit 90,4 g (0,55 mol) Triethoxysilan und 50 g (0,47 mol) p-Xylol vorgelegt und unter Rühren auf 160 °C erhitzt. Man läßt 3 Stunden reagieren, wobei sich die Innentemperatur des Reaktors durch die auftretende Exothermie auf 180 °C erhitzt. Der während der Reaktion gemessene Druck beträgt 2,0 bis 2,5 bar. Danach läßt man unter Rühren über ca. 1 Stunde abkühlen und überführt die Reaktionsmischung in eine Kurzweg-Destillationsapparatur (Vigreux, ohne Kolonnenschuß). Nach destillativer Reinigung erhält man 105 g (0,38 mol) des Zielproduktes N-1-(Triethoxysilyl)ethylpyrrolidon-2, entsprechend einer Ausbeute von 76 Gew.-% bezüglich eingesetztem Vinylpyrrolidon-2.

### Beispiel 7

In einem 250-ml-Doppelmantelglaskolben werden unter Rühren 3,3 mg (6,7 µmol; Verhältnis 1 : 15.000 gegenüber den Edukten) [Rh(Cyclooctadien-1,5)Cl]₂ zu 16,4 g (0,1 mol) Triethoxysilan gegeben und auf eine Sumpftemperatur von 122°C erhitzt. Dazu tropft man über 2,5 Stunden 11,1 g (0,1 mol) N-Vinylpyrrolidon-2, wobei sich die Reaktionsmischung unter leichter Gelbfärbung durch die auftretende leichte Exothermie bis auf 130°C erhitzt. Der Fortgang der Umsetzung wird über GC analytisch verfolgt. Danach läßt man noch 0,5 Stunden bei gleicher Temperatur nachreagieren, kühlt ab und überführt in eine Kurzweg-Destillationsapparatur (Vigreux, ohne Kolonnenschuß). Nach destillativer Reinigung erhält man 20,1 g (0,073 mol) des Zielproduktes N-1-(Triethoxysilyl)ethylpyrrolidon-2, entsprechend einer Ausbeute von 73 Gew.-% bezüglich der Edukte.

### Beispiel 8

In einem 4-I-Doppelmantelglaskolbenwerden unter Rühren 420 mg (0,85 mmol; Verhältnis 1 6.300 gegenüber den Edukten) [Rh(Cyclooctadien-1,5)Cl]₂ zu 589 g (5,3 mol) N-Vinylpyrrolidon-2 gegeben und zum Sieden (149 °C Sumpftemperatur) erhitzt. Dazu tropft man über 2,5 Stunden 712 g (5,3 mol) Methyldiethoxysilan, wobei sich die Reaktionsmischung unter leichter Gelbfärbung durch die auftretende Exothermie bis auf 190°C erhitzt. Der Fortgang der Umsetzung wird über GC analytisch verfolgt. Danach läßt man noch 2 Stunden bei gleicher Temperatur nachreagieren, kühlt ab und überführt in eine Kurzweg-Destillationsapparatur (Vigreux, ohne Kolonnenschuß). Nach destillativer Reinigung erhält man 1046 g (4,26 mol) des Zielproduktes N-1-(Methyldiethoxysilyl)ethylpyrrolidon-2, entsprechend einer Ausbeute von 80 Gew.-% bezüglich der Edukte.

### Beispiel 9

Zur Herstellung einer 1 % Cyclocarboxamid-funktionellen Oligosiloxanlösung werden 5 g N-1-(Triethoxysilyl)ethylpyrrolidon-2 in eine Mischung aus 485 g Ethanol und 10 g destilliertem Wasser, welches zuvor mit Essigsäure auf einen pH-Wert von 2,5 (Messung über pH-Sticks) eingestellt wurde, getropft. Die Lösung wird über 2 Stunden bei Raumtemperatur gerührt und ist danach anwendungsfertig. Der pH-Wert der fertigen, alkoholischen Oligosiloxanlösung beträgt ca. 6; die Lagerstabilität beträgt > 3 Monate.

### Beispiel 10

in die aus Beispiel 9 erhaltene Oligosiloxanlösung werden zuvor mit n-Heptan entfettete Glas-, Kupfer- und Aluminiumplatten (Format 7 x 15 cm) für je 5 Minuten getaucht. Danach werden die Platten hochkant aufgestellt und getrocknet, worauf eine einstündige Nachbehandlung im Trockenschrank bei 100°C erfolgt.

Man erhält eine flächendeckende Beschichtung der Oberfläche mit einem farblosen lackartigen Siloxanfilm, dessen Härte mit 5H (Stifttest) bestimmt wurde.

## Patentansprüche

1. N-[ω-(Methyl),ω-(Silyl)]alkyl-N-organocarboxamide der allgemeinen Formel I 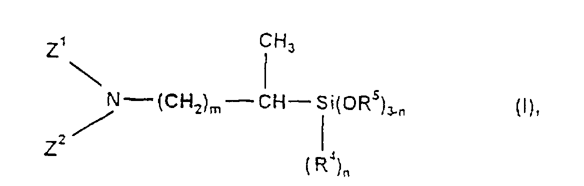 worin
Z¹ für 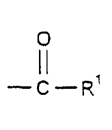 steht,
Z² gleich R² oder 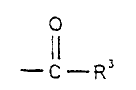 oder
Z¹ und Z² zu einem Cyclus der nachfolgenden Formel 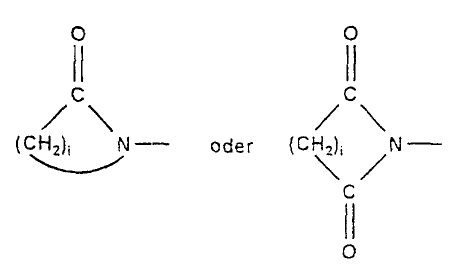 oder 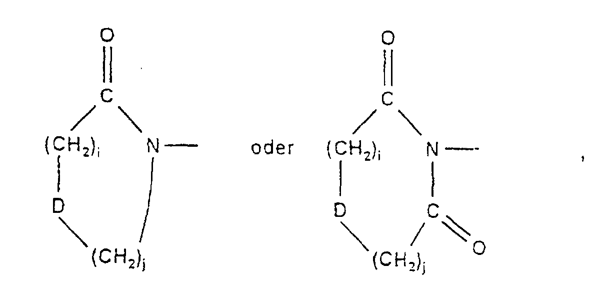 wobei D für eine HN-, O-, S-, SO- oder SO₂-Gruppe steht, i sowie j gleich oder verschieden sind und einen ganzzahligen Wert von 0 bis 7 darstellen,
verbrückt sind und die Ringgröße im Cyclus ≤ 9 ist,
R¹, R², R³, R⁴, R⁵ gleich oder verschieden sind und jeweils ein Wasserstoffatom oder eine lineare, verzweigte oder cyclische Alkyl-Gruppe mit 1 bis 8 C-Atomen oder eine Aryl-Gruppe mit 6 bis 10 C-Atomen bedeuten und R⁵ sowohl für ein Wasserstoffatom als auch für eine lineare, verzweigte oder cyclische Alkyl-Gruppe mit 1 bis 8 C-Atomen oder eine Aryl-Gruppe mit 6 bis 10 C-Atomen stehen kann und
m einen ganzzahligen Wert von 0 bis 16 und
n einen ganzzahligen Wert von 0 bis 3 darsteilen,
ausgenommen sind nichtcyclische Verbindungen gemäß Formel I mit m gleich 1 und N-1-(Triethoxysilyl)ethylpyrrolidon-2.

2. Oligomere Si-haltige Verbindungen der allgemeinen Formel II 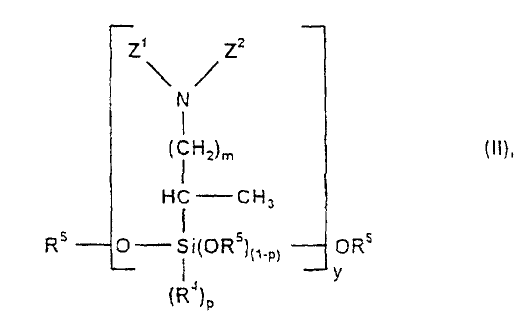 worin
Z¹ für 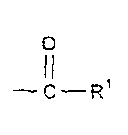 steht,
Z² gleich R² oder 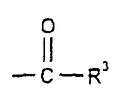 oder
Z¹ und Z² zu einem Cyclus der nachfolgenden Formel 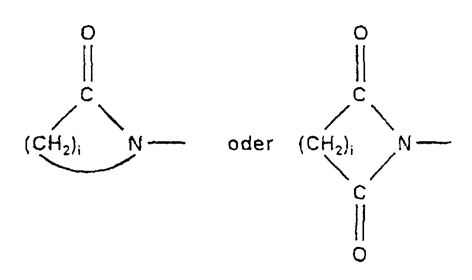 oder 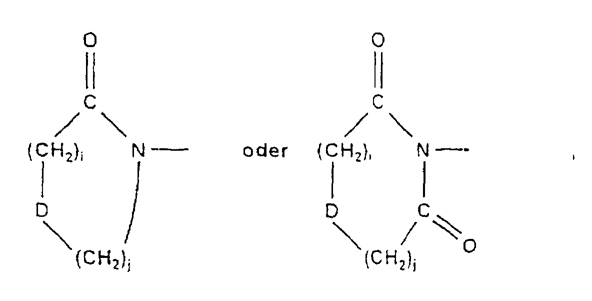 wobei D für eine HN-, O-, S-, SO- oder SO₂-Gruppe steht, i sowie j gleich oder verschieden sind und einen ganzzahligen Wert von 0 bis 7 darstellen,
verbrückt sind und die Ringgröße im Cyclus ≤ 9 ist,
R¹, R², R³, R⁴, R⁵ gleich oder verschieden sind und jeweils ein Wasserstoffatom oder eine lineare, verzweigte oder cyclische Alkyl-Gruppe mit 1 bis 8 C-Atomen oder eine Aryl-Gruppe mit 6 bis 10 C-Atomen bedeuten und R⁵ sowohl für ein Wasserstoffatom als auch für eine lineare, verzweigte oder cyclische Alkyl-Gruppe mit 1 bis 8 C-Atomen oder eine Aryl-Gruppe mit 6 bis 10 C-Atomen stehen kann,
m einen ganzzahligen Wert von 0 bis 16,
p einen ganzzahligen Wert von 0 oder 1 und
y einen ganzzahligen Wert von 2 bis 50 annimmt,
und polykondensierte Si-haltige Verbindungen der allgemeinen Formel III 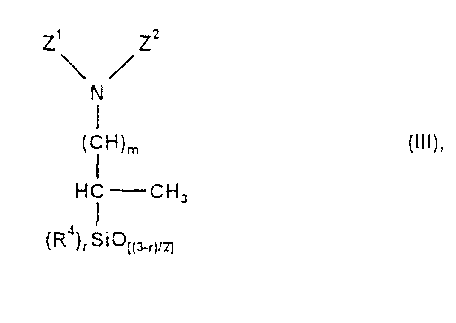 worin
Z¹ für 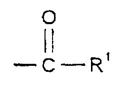 steht,
Z² gleich R² oder 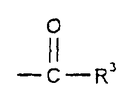 oder
Z¹ und Z² zu einem Cyclus der nachfolgenden Formel 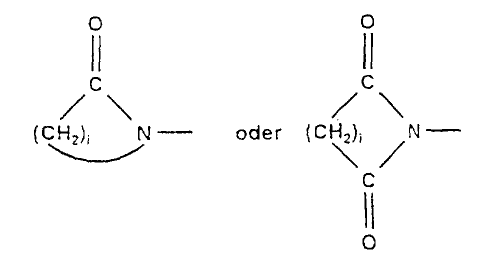 oder 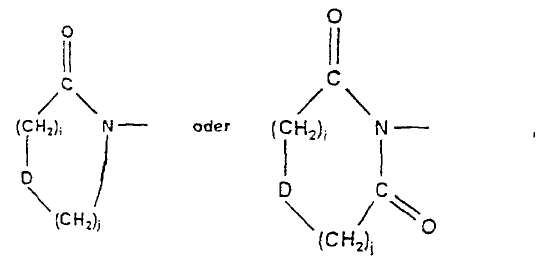 wobei D für eine HN-, O-, S-, SO- oder SO₂-Gruppe steht, i sowie j gleich oder verschieden sind und einen ganzzahligen Wert von 0 bis 7 darstellen,
verbrückt sind und die Ringgröße im Cyclus ≤ 9 ist,
R¹, R², R³, R⁴ gleich oder verschieden sind und jeweils für ein Wasserstoffatom oder eine lineare, verzweigte oder cyclische Alkyl-Gruppe mit 1 bis 8 C-Atomen oder eine Aryl-Gruppe mit 6 bis 10 C-Atomen stehen,
m einen ganzzahligen Weh von 0 bis 16 und
r einen ganzzahligen Wert von 0 oder 1 annimmt,
ausgenommen sind hinsichtlich Z¹ und Z² nichtcyclische Verbindungen gemäß Formel III mit m gleich 1.

3. N-[ω-(Methyl),ω-(Silyl)]alkyl-N-organocarboxamide der allgemeinen Formel I 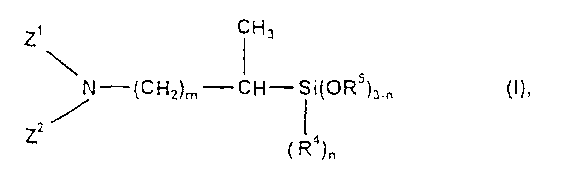 worin
Z¹ für 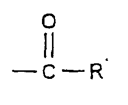 steht,
Z² gleich R² oder 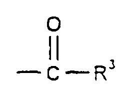 oder
Z¹ und Z² zu einem Cyclus der nachfolgenden Formel 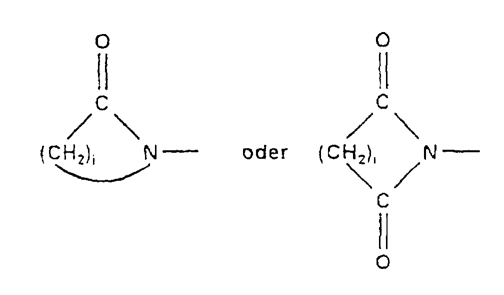 oder 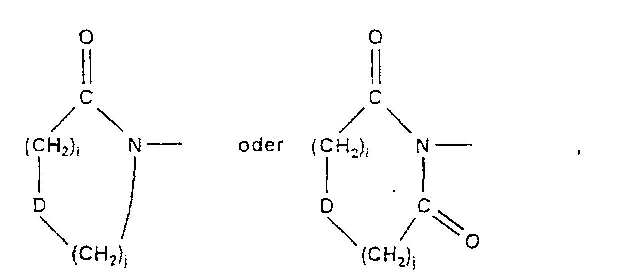 wobei D für eine HN-, O-, S-, SO- oder SO₂-Gruppe steht, i sowie j gleich oder verschieden sind und einen ganzzahligen Wert von 0 bis 7 darstellen,
verbrückt sind und die Ringgröße im Cydus ≤ 9 ist,
R¹, R², R³, R⁴, R⁵ gleich oder verschieden sind und jeweils ein Wasserstoffatom oder eine lineare, verzweigte oder cyclische Alkyl-Gruppe mit 1 bis 8 C-Atomen oder eine Aryl-Gruppe mit 6 bis 10 C-Atomen bedeuten und R⁵ sowohl für ein Wasserstoffatom als auch für eine lineare, verzweigte oder cyclische Alkyl-Gruppe mit 1 bis 8 C-Atomen oder eine Aryl-Gruppe mit 6 bis 10 C-Atomen stehen kann und
m einen ganzzahligen Wert von 0 bis 16 und
n einen ganzzahtigen Wert von 0 bis 3 darstellen,
erhältlich durch Umsetzen eines ω-Alkylencarboxamids der allgemeinen Formel IV 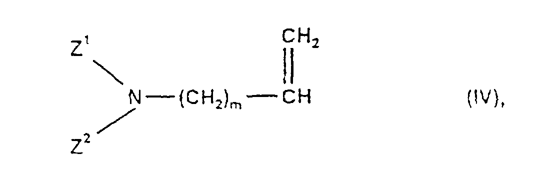
worin Z¹, Z², R¹, R², R³ und m die für Formel I obengenannte Bedeutung haben,
mit einem Hydrogensilan der allgemeinen Formel V 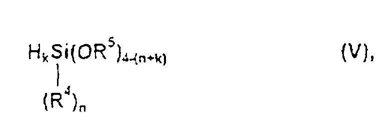
worin R⁴ und R⁵ die für Formel I obengenannte Bedeutung haben und
n ein ganzzahliger Wert von 0, 1, 2 oder 3,
k ein ganzzahliger Wert von 1, 2, 3 oder 4 und (n+k) ≤ 4 sind,
in Gegenwart von metallischem Rhodium auf einem Aktivkohleträger, (Ph₃P)₃Rh(CO)H, (Ph₃P)₃RhCl oder [Rh(Cyclooctadien-1,5)Cl]₂ oder einem Gemisch, das mindestens eine der zuvorgenannten Rh-Komplexverbindungen und mindestens eine Pt-Komplexverbindung enthält, als Katalysator und Aufarbeiten der erhaltenen Produktmischung.

4. Oligomere Si-haltige Verbindungen der allgemeinen Formel II 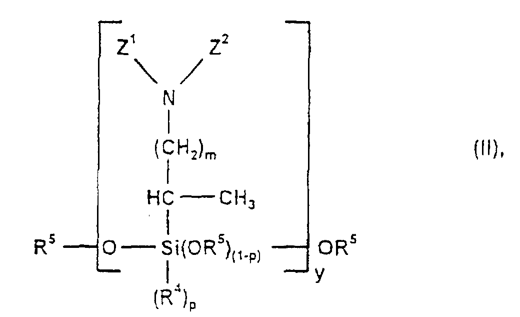 worin
Z¹ für 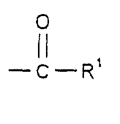 steht,
Z² gleich R² oder 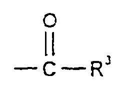 oder
Z¹ und Z² zu einem Cyclus der nachfolgenden Formel 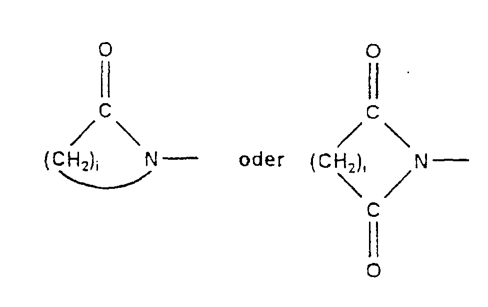 oder 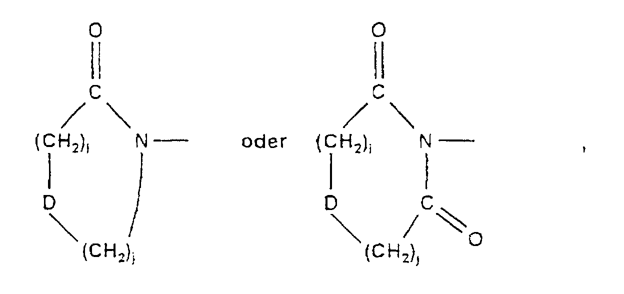 wobei D für eine HN-, O-, S-, SO- oder SO₂-Gruppe steht, i sowie j gleich oder verschieden sind und einen ganzzahligen Wert von 0 bis 7 darstellen, verbrückt sind und die Ringgröße im Cyclus ≤ 9 ist,
R¹, R², R³, R⁴, R⁵ oder verschieden sind und jeweils ein Wasserstoffatom oder eine lineare, verzweigte oder cyclische Alkyl-Gruppe mit 1 bis 8 C-Atomen oder eine Aryl-Gruppe mit 6 bis 10 C-Atomen bedeuten und R⁵ sowohl für ein Wasserstoffatom als auch für eine lineare, verzweigte oder cyclische Alkyl-Gruppe mit 1 bis 8 C-Atomen oder eine Aryl-Gruppe mit 6 bis 10 C-Atomen stehen kann,
m einen ganzzahligen Wert von 0 bis 16,
p einen ganzzahligen Wert von 0 oder 1 und
y einen ganzzahligen Wert von 2 bis 50 annimmt,
sowie polykondensierte Si-haltige Verbindungen der allgemeinen Formel III 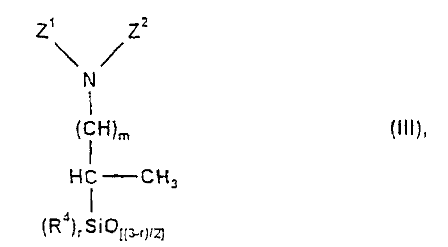 worin
Z¹ für 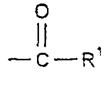 steht,
Z² gleich R² oder 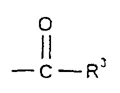 oder
Z¹ und Z² zu einem Cyclus der nachfolgenden Formel 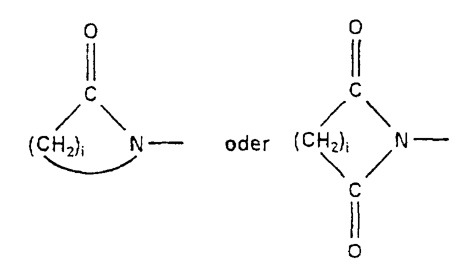 oder 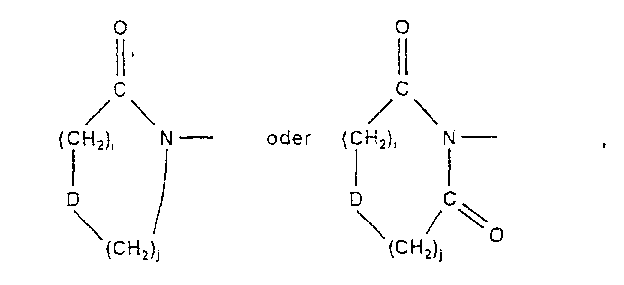 wobei D für eine HN-, O-, S-, SO- oder SO²-Gruppe steht, i sowie j gleich oder verschieden sind und einen ganzzahligen Wert von 0 bis 7 darstellen,
verbrückt sind und die Ringgröße im Cyclus ≤ 9 ist,
R¹, R², R³, R⁴ gleich oder verschieden sind und jeweils für ein Wasserstoffatom oder eine lineare, verzweigte oder cyclische Alkyl-Gruppe mit 1 bis 8 C-Atomen oder eine Aryl-Gruppe mit 6 bis 10 C-Atomen stehen,
m einen ganzzahligen Wert von 0 bis 16 und
r einen ganzzahligen Wert von 0 oder 1 annimmt,
oder Gemische, die Si-haltige Verbindungen der allgemeinen Formeln l, II und/oder III enthalten,
erhältlich durch kontrollierte Hydrolyse mindestens eines N-[ω-(Methyl),ω-(Silyl)]alkyl-N-organocarboxamids der allgemeinen Formel I 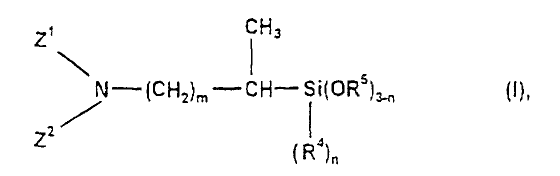 worin
Z¹ für 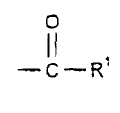 steht,
Z² gleich R² oder 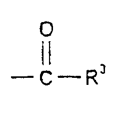 oder
Z¹ und Z² zu einem Cyclus der nachfolgenden Formel 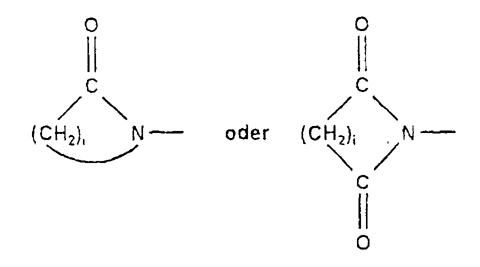 oder 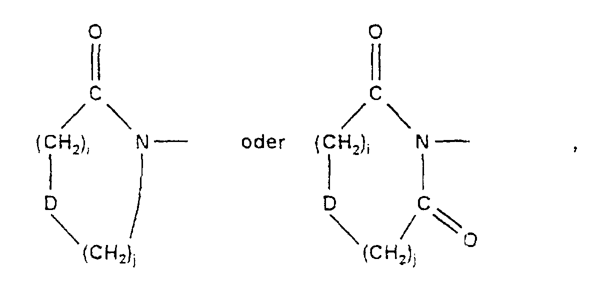 wobei D für eine HN-, O-, S-, SO- oder SO₂-Gruppe steht, i sowie j gleich oder verschieden sind und einen ganzzahligen Wert von 0 bis 7 darstellen,
verbrückt sind und die Ringgröße im Cyclus ≤ 9 ist,
R¹, R², R³, R⁴, R⁵ gleich oder verschieden sind und jeweils ein Wasserstoffatom oder eine lineare, verzweigte oder cyclische Alkyl-Gruppe mit 1 bis 8 C-Atomen oder eine Aryl-Gruppe mit 6 bis 10 C-Atomen bedeuten und R⁵ sowohl für ein Wasserstoffatom als auch für eine lineare, verzweigte oder cyclische Alkyl-Gruppe mit 1 bis 8 C-Atomen oder eine Aryl-Gruppe mit 6 bis 10 C-Atomen stehen kann und
m einen ganzzahligen Wert von 0 bis 16 und
n einen ganzzahligen Wert von 0 bis 3 darstellen,
in Wasser oder einem Alkohol/Wassergemisch,
worin Alkohol : Wasser in einem Massenverhältnis von 1 : 100 bis 100 : 1 vorliegen und das Wasser oder das Alkohol/Wassergemisch durch Zugabe einer anorganischen oder organischen Säure oder eines sauren Salzes auf einen pH-Wert < 7 oder durch Zugabe einer Base oder eines basischen Salzes auf einen pH-Wert > 7 eingestellt wird,
wobei die Verbindung(en) gemäß Formel I zu Wasser in einem Massenverhältnis von 0,1 : 99,9 bis 99,99 : 0,01 eingesetzt werden.

5. Verfahren zur Herstellung von N-[ω-(Methyl),ω-(Silyl)]alkyl-N-organocarboxamiden der allgemeinen Formel l nach Anspruch 1 oder 3 durch eine Hydrosilylierungsreaktion in Gegenwart eines Rhodium-haltigen Katalysators,
**dadurch gekennzeichnet,**
**daß** man ein ω-Alkylencarboxamid der allgemeinen Formel IV 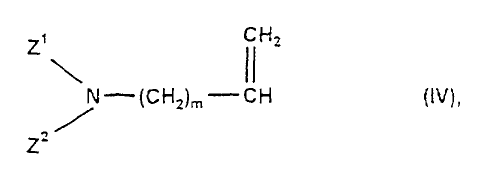
worin Z¹, Z², R¹ R² R³ und m die für Formel I obengenannle Bedeutung haben,
mit einem Hydrogensilan der allgemeinen Formel V 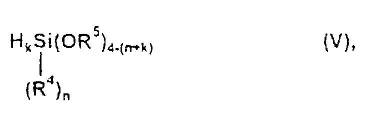
worin R⁴, R⁵, n, k und (n+k) die für Formel V obengenannte Bedeutung haben,
in Gegenwart von metallischem Rhodium auf einem Aktivkohleträger, (Ph₃P)₃Rh(CO)H, (Ph₃P)₃RhCl oder [Rh(Cyclooctadien-1,5)Cl]₂ oder einem Gemisch, das mindestens eine der zuvorgenannten Rh-Komplexverbindungen und mindestens eine Pt-Komplexverbindung enthält, als Katalysator umsetzt und die erhaltene Produktmischung aufarbeitet.

6. Verfahren nach Anspruch 5,
**dadurch gekennzeichnet,**
**daß** man den Katalysator zu dem ω-Alkylencarboxamid gemäß Formel IV in einem Massenverhältnis von 1 : 1.000 bis 1 : 100.000 einsetzt.

7. Verfahren nach Anspruch 6,
**dadurch gekennzeichnet,**
**daß** man den Katalysator zu dem ω-Alkylencarboxamid gemäß Formel IV in einem Massenverhältnis von 1 : 3.000 bis 1 : 50.000 einsetzt.

8. Verfahren nach Anspruch 7,
**dadurch gekennzeichnet,**
**daß** man den Katalysator zu dem ω-Alkylcarboxamid gemäß Formel IV in einem Massenverhältnis von 1 : 5.000 bis 1 : 30.000 einsetzt.

9. Verfahren nach mindestens einem der Ansprüche 5 bis 8,
**dadurch gekennzeichnet,**
**daß** man (Ph₃P)₂PtCl₂, (Ph₃P)₄Pt oder Pt-Komplexe auf Basis von Hexachlorplatinsäure im Gemisch mit mindestens einer der genannten Rh-Komplexverbindungen als Katalysator einsetzt.

10. Verfahren nach Anspruch 9,
**dadurch gekennzeichnet,**
**daß** man Pt-Komplexverbindungen auf Basis von Hexachloroplatinsäure als Aceton-, Cyclohexanon- oder i-Propanolkomplexe einsetzt.

11. Verfahren nach Anspruch 9 oder 10,
**dadurch gekennzeichnet,**
**daß** man Pt- zu Rh-Komplexverbindungen in einem Massenverhältnis von 1 : 10 bis 5 : 1 einsetzt.

12. Verfahren nach mindestens einem der Ansprüche 5 bis 11,
**dadurch gekennzeichnet,**
**daß** man die Umsetzung in Gegenwart eines inerten Kohlenwasserstoffs durchführt.

13. Verfahren nach Anspruch 12,
**dadurch gekennzeichnet, daß** man die Umsetzung in Toluol, Xylol oder n-Decan durchführt.

14. Verfahren zur Herstellung von Si-haltigen Verbindungen der allgemeinen Formeln II oder III oder einem Gemisch, das Si-haltige Verbindungen der allgemeinen Formeln I, II und/oder III enthält, nach mindestens einem der Ansprüche 1 bis 13,
**dadurch gekennzeichnet,**
**daß** man mindestens ein N-[ω-(Methyl),ω-(Silyl)]alkyl-N-organocarboxamid der allgemeinen Formel I 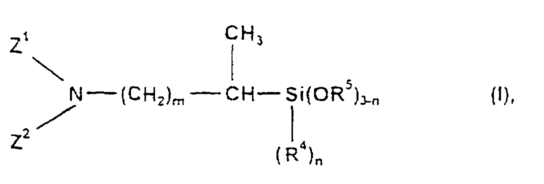
worin Z¹, Z², R¹, R², R³, R⁴, R⁵, m und n die für Formel I obengenannte Bedeutung haben,
in Wasser oder einem Alkohol/Wassergemisch,
worin Alkohol : Wasser in einem Massenverhältnis von 1 : 100 bis 100 : 1 vorliegen und das Wasser oder das Alkohol/Wassergemisch durch Zugabe einer anorganischen oder organischen Säure oder eines sauren Salzes auf einen pH-Wert < 7 oder durch Zugabe einer Base oder eines basischen Salzes auf einen pH-Wert > 7 eingestellt wird,
und die Verbindung(en) gemäß Formel I zu Wasser in einem Massenverhältnis von 0,1 : 99,9 bis 99,99 : 0,01 eingesetzt werden,
kontrolliert hydrolysiert.

15. Verfahren nach Anspruch 14,
**dadurch gekennzeichnet,**
**daß** man für die Einstellung des pH-Werts Chlorwasserstoff, Ameisensäure, Essigsäure, Zitronensäure, Natronlauge, Natriumformiat oder Natriumacetat verwendet.

16. Verfahren nach Anspruch 14 oder 15,
**dadurch gekennzeichnet,**
**daß** man den pH-Wert des Wassers oder Alkohol/Wassergemisches auf einen Wert von ≥ 2 und ≤ 6 einstellt und die Hydrolyse im pH-Wertebereich ≥ 2 und ≤ 6 durchführt.

17. Verfahren nach mindestens einem der Ansprüche 14 bis 16,
**dadurch gekennzeichnet,**
**daß** man die Verbindung(en) gemäß Formel I zu Wasser in einem Massenverhältnis von 10 : 90 bis 99,9 : 0,1 einsetzt.

18. Verfahren nach mindestens einem der Ansprüche 14 bis 17,
**dadurch gekennzeichnet,**
**daß** man einen Alkohol oder ein Alkoholgemisch verwendet, wobei mindestens einer der Alkohole mit mindestens einer Alkoxy-Gruppierung der eingesetzten Verbindung gemäß Formel I korrespondiert.

19. Verfahren nach mindestens einem der Ansprüche 14 bis 18,
**dadurch gekennzeichnet,**
**daß** man als Alkohol Methanol, Ethanol, Propanol, Butanol, 2-Methoxyethanol, 2-Ethylhexanol oder deren Gemische einsetzt.

20. Verwendung der monomeren, oligomeren oder polykondensierten Si-haltigen Verbindungen oder deren Gemische nach den Ansprüchen 1 bis 19 als Haftvermittler zwischen anorganischen und/oder organischen Stoffen.

21. Verwendung der monomeren, oligomeren oder polykondensierten Si-haltigen Verbindungen oder deren Gemische nach den Ansprüchen 1 bis 19 zur Herstellung von kratzfesten und elastischen Beschichtungen zur Oberflächenmodifizierung von anorganischen oder organischen Stoffen.

## Claims

1. An N-[ω-(methyl), ω-(silyl)]alkyl-N-organocarboxamide of the general formula I 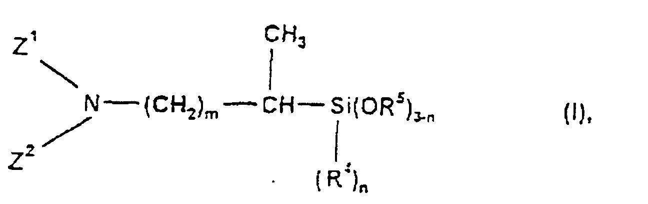 in which
Z¹ is 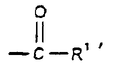
Z² is R² or 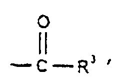 or
Z¹ and Z² are bridged to give a ring of the following formula 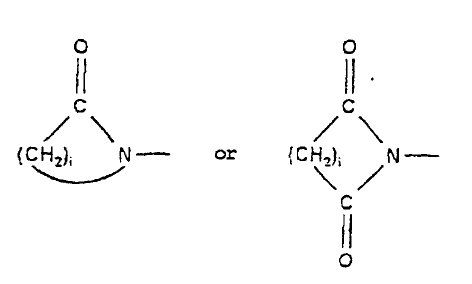 or 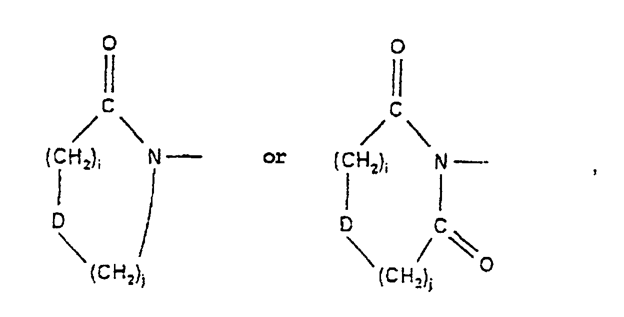 where D is a HN, O, S, SO or SO₂ group and i and j are identical or different and are an integer from 0 to 7,
and the size of the ring is ≤ 9,
R¹, R², R³, R⁴ and R⁵ are identical or different and are each a hydrogen atom or a linear, branched or cyclic alkyl group having 1 to 8 C atoms or an aryl group having 6 to 10 C atoms, and R⁵ can be either a hydrogen atom or a linear, branched or cyclic alkyl group having 1 to 8 C atoms or an aryl group having 6 to 10 C atoms, and
m is an integer from 0 to 16, and
n is an integer from 0 to 3,
with the exception of noncyclic compounds of formula I where m is 1 and N-1-(triethoxysilyl)ethyl-2-pyrrolidone.

2. An oligomeric Si-containing compound of the general formula II 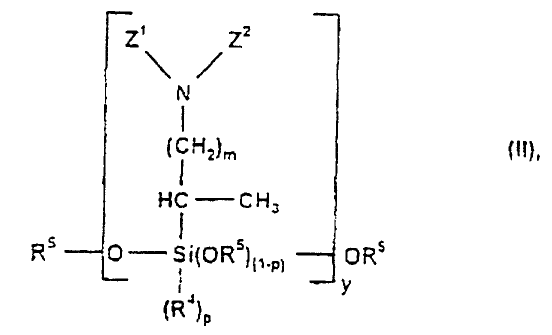 in which
Z¹ is, 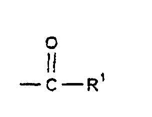
Z² is R² or, 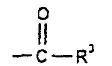 or
Z¹ and Z² are bridged to give a ring of the following formula 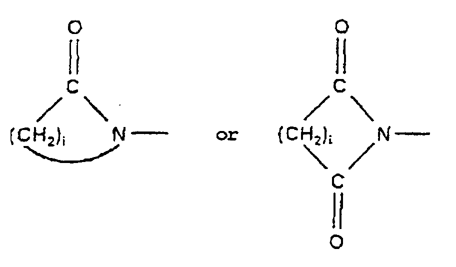 or 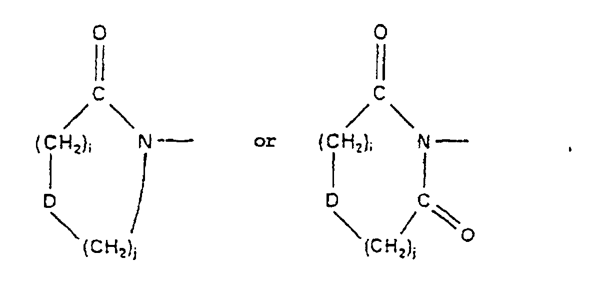 where D is a HN, O, S, SO or SO₂ group and i and j are identical or different and are an integer from 0 to 7,
and the size of the ring is ≤ 9,
R¹ R², R³, R⁴ and R⁵ are identical or different and are each a hydrogen atom or a linear, branched or cyclic alkyl group having 1 to 8 C atoms or an aryl group having 6 to 10 C atoms, and R⁵ can be either a hydrogen atom or a linear, branched or cyclic alkyl group having 1 to 8 C atoms or an aryl group having 6 to 10 C atoms,
m is an integer from 0 to 16,
p is an integer 0 or 1, and
y is an integer from 2 to 50,
or a polycondensed Si-containing compound of the general formula III 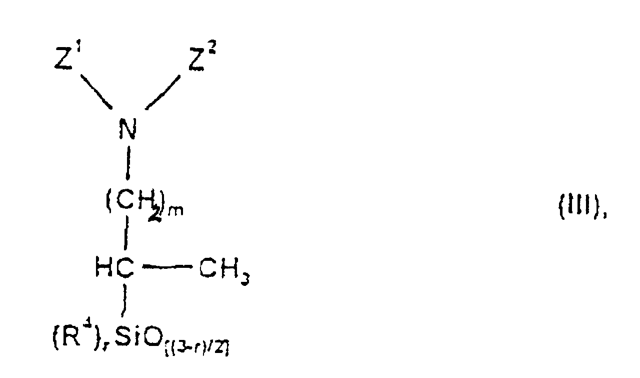 in which
Z¹ is 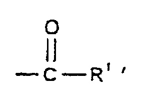
Z² is R² or 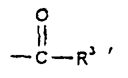 or
Z¹ and Z² are bridged to give a ring of the following formula 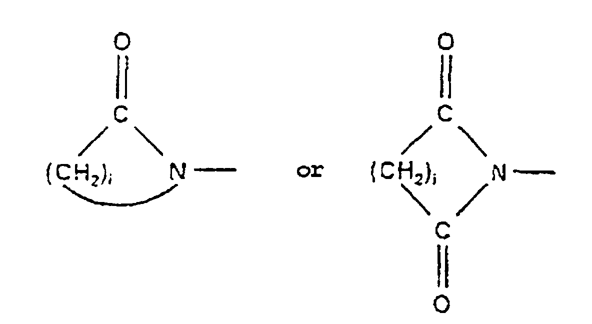 or 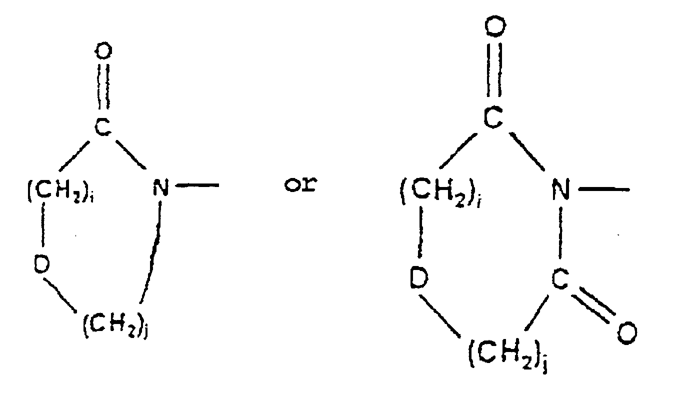
where D is a HN, O, S, SO or SO₂ group and i and j are identical or different and are an integer from 0 to 7,
and the size of the ring is ≤ 9,
R¹, R², R³ and R⁴ are identical or different and are each a hydrogen atom or a linear, branched or cyclic alkyl group having 1 to 8 C atoms or an aryl group having 6 to 10 C atoms,
m is an integer from 0 to 16, and
r is an integer 0 or 1, with the exception of compounds of formula III where m is 1 which are noncyclic in terms of Z¹ and Z².

3. An N-[ω-(methyl), ω-(silyl)]alkyl-N-organocarboxamide of the general formula I 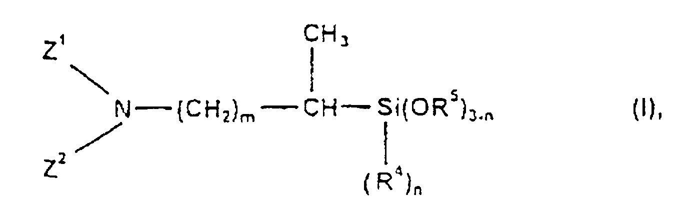 in which
Z¹ is 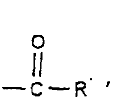
Z² is R² or 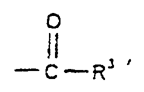 or
Z¹ and Z² are bridged to give a ring of the following formula 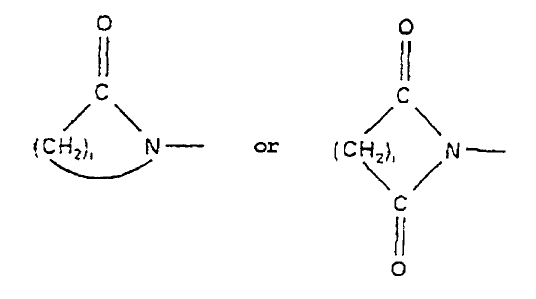 or 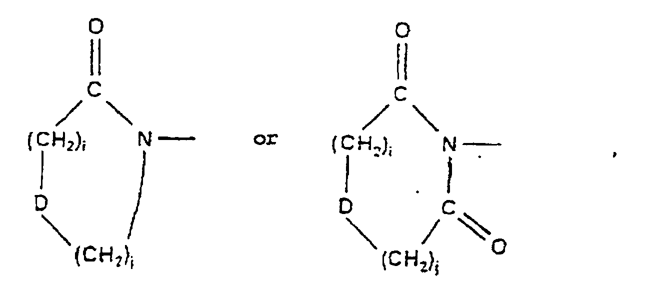
where D is a HN, O, S, SO or SO₂ group and i and j are identical or different and are an integer from 0 to 7,
and the size of the ring is ≤ 9,
R¹, R², R³, R⁴ and R⁵ are identical or different and are each a hydrogen atom or a linear, branched or cyclic alkyl group having 1 to 8 C atoms or an aryl group having 6 to 10 C atoms, and R⁵ can be either a hydrogen atom or a linear, branched or cyclic alkyl group having 1 to 8 C atoms or an aryl group having 6 to 10 C atoms, and
m is an integer from 0 to 16, and
n is an integer from 0 to 3,
obtainable by reacting an ω-alkylenecarboxamide of the general formula IV 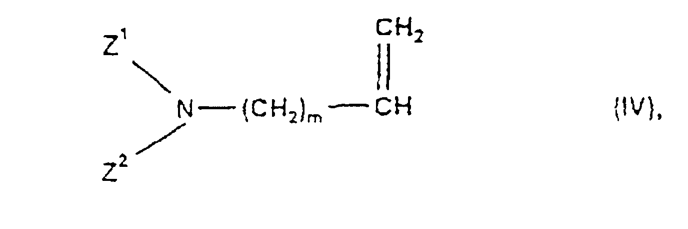 in which Z¹, Z², R¹, R², R³ and m are as defined above for formula I,
with a hydridosilane of the general formula V 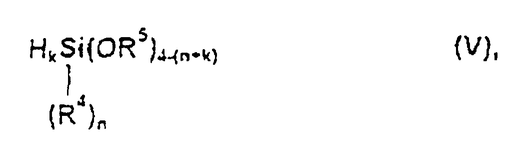 in which R⁴ and R⁵ are as defined above for formula I and
n is an integer 0, 1, 2 or 3,
k is an integer 1, 2, 3 or 4 and
(n+k) is ≤ 4,
in the presence of metallic rhodium on an active carbon support, (Ph₃P)₃Rh(CO)H, (Ph₃P)₃RhCl or [Rh(1,5-cyclooctadiene)Cl]₂ or of a mixture which comprises at least one of the abovementioned Rh complex compounds and at least one Pt complex compound as catalyst, and working up the resulting product mixture.

4. An oligomeric Si-containing compound of the general formula II 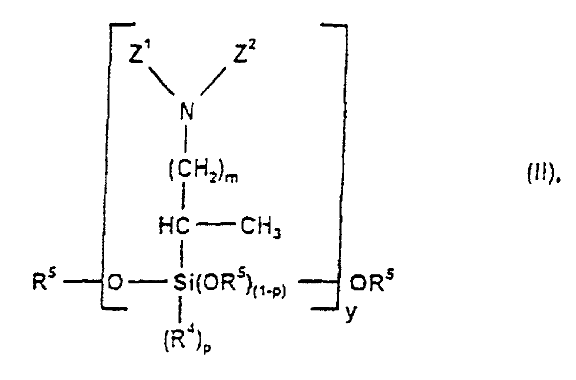 in which
Z¹ is 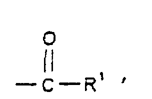
Z² is R² or 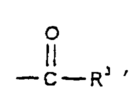 or
Z¹ and Z² are bridged to give a ring of the following formula 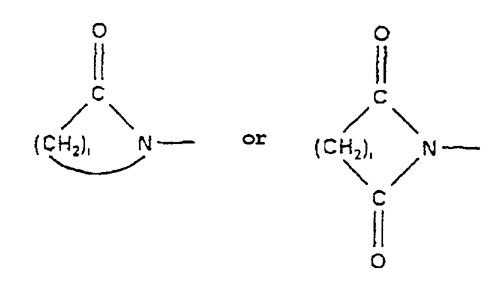 or 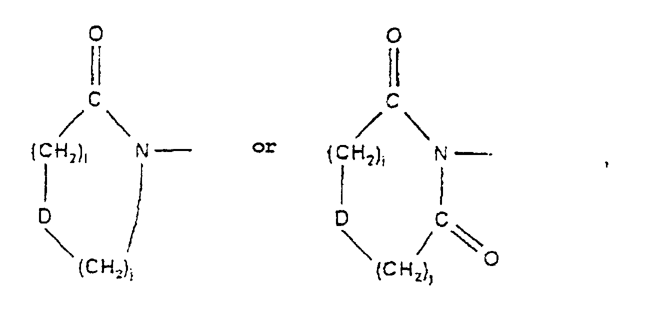 where D is a HN, O, S, SO or SO₂ group and i and j are identical or different and are an integer from 0 to 7,
and the size of the ring is ≤ 9,
R¹, R², R³, R⁴ and R⁵ are identical or different and are each a hydrogen atom or a linear, branched or cyclic alkyl group having 1 to 8 C atoms or an aryl group having 6 to 10 C atoms, and R⁵ can be either a hydrogen atom or a linear, branched or cyclic alkyl group having 1 to 8 C atoms or an aryl group having 6 to 10 C atoms,
m is an integer from 0 to 16,
p is an integer 0 or 1, and
y is an integer from 2 to 50,
or a polycondensed Si-containing compound of the general formula III 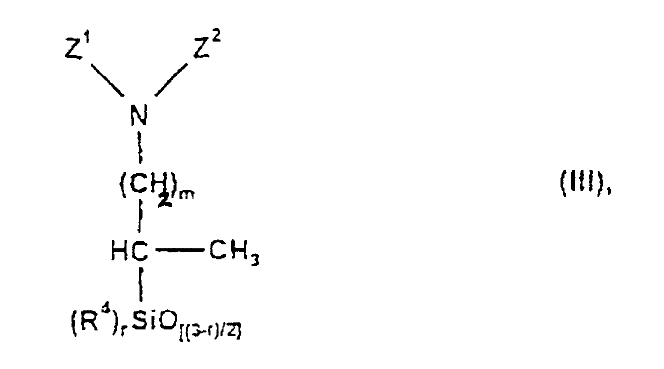 in which 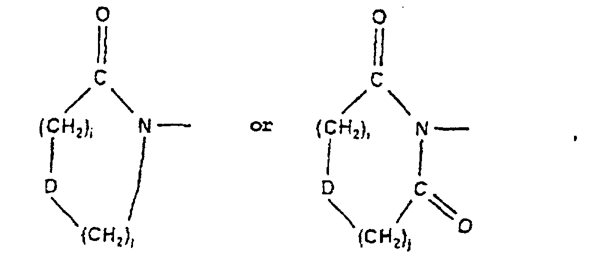 where D is a HN, 0, S, SO or SO₂ group and i and j are identical or different and are an integer from 0 to 7,
and the size of the ring is ≤ 9,
R¹, R², R³ and R⁴ are identical or different and are each a hydrogen atom or a linear, branched or cyclic alkyl group having 1 to 8 C atoms or an aryl group having 6 to 10 C atoms,
m is an integer from 0 to 16, and
r is an integer 0 or 1,
or a mixture which comprises an Si-containing compound of the general formulae I, II and/or III,
obtainable by controlled hydrolysis of at least one N-[ω-(methyl), ω-(silyl)]alkyl-N-organocarboxamide of the general formula I 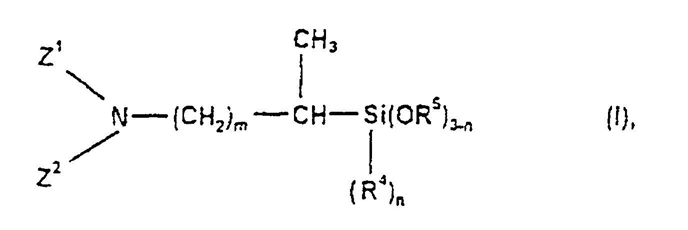 in which
Z¹ is 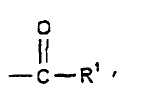
Z² is R² or 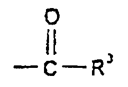 or
Z¹ and Z² are bridged to give a ring of the following formula 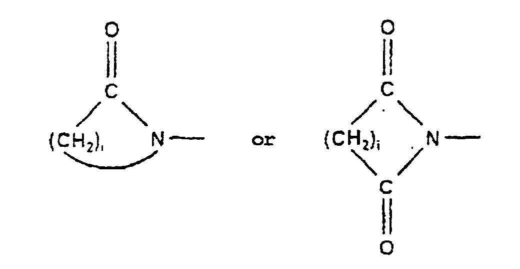 or 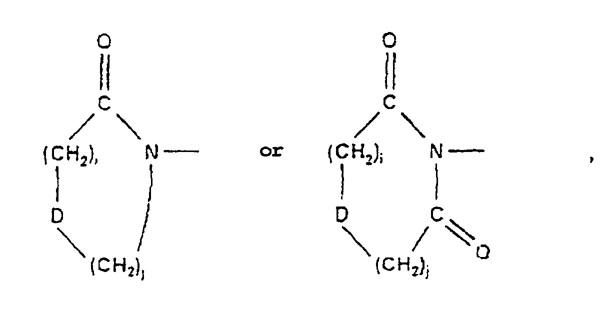 where D is a HN, O, S, SO or SO₂ group and i and j are identical or different and are an integer from 0 to 7,
and the size of the ring is ≤ 9,
R¹, R², R³, R⁴ and R⁵ are identical or different and are each a hydrogen atom or a linear, branched or cyclic alkyl group having 1 to 8 C atoms or an aryl group having 6 to 10 C atoms, and R⁵ can be either a hydrogen atom or a linear, branched or cyclic alkyl group having 1 to 8 C atoms or an aryl group having 6 to 10 C atoms, and
m is an integer from 0 to 16, and
n is an integer from 0 to 3,
in water or in an alcohol/water mixture
in which alcohol and water are present in a proportion to one another by mass of from 1:100 to 100:1, and the water or the alcohol/water mixture is adjusted to a pH < 7 by addition of an inorganic or organic acid or of an acidic salt or to a pH > 7 by addition of a base or of a basic salt,
the compound(s) of formula I and water being employed in a proportion to one another by mass of from 0.1:99.9 to 99.99:0.01.

5. A process for preparing an N-[ω-(methyl), ω-(silyl)]alkyl-N-organocarboxamide of the general formula I according to claim 1 or 3 by a hydrosilylation reaction in the presence of a rhodium-containing catalyst, **characterized in that** an ω-alkylenecarboxamide of the general formula IV 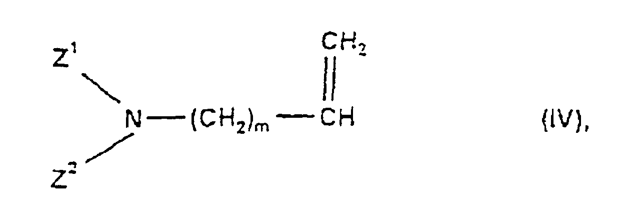 in which Z¹, Z², R¹, R², R³ and m are as defined above for formula I,
is reacted with a hydrosilane of the general formula V 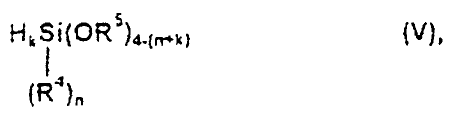 in which R⁴, R⁵, n, k and (n+k) are as defined above for formula V,
in the presence of metallic rhodium on an active carbon support, (Ph₃P)₃Rh(CO)H, (Ph₃P)₃RhCl or [Rh(1,5-cyclooctadiene)Cl]₂ or of a mixture comprising at least one of the abovementioned Rh complex compounds and at least one Pt complex compound, as catalyst, and the resulting product mixture is worked up.

6. A process according to claim 5, **characterized in that** the catalyst and the ω-alkylenecarboxamide of formula IV are employed in a proportion by mass to one another of from 1:1000 to 1:100,000.

7. A process according to claim 6, **characterized in that** the catalyst and the ω-alkylenecarboxamide of formula IV are employed in a proportion by mass to one another of from 1:3000 to 1:50,000.

8. A process according to claim 7, **characterized in that** the catalyst and the ω-alkylenecarboxamide of formula IV are employed in a proportion by mass to one another of from 1:5000 to 1:30,000.

9. A process according to at least one of claims 5 to 8, **characterized in that** (Ph₃P)₂PtCl₂, (Ph₃P)₄Pt or Pt complexes based on hexachloroplatinic acid are employed in a mixture with at least one of the abovementioned Rh complex compounds as catalyst.

10. A process according to claim 9, **characterized in that** Pt complex compounds based on hexachloroplatinic acid, as acetone, cyclohexanone or isopropanol complexes, are employed.

11. A process according to claim 9 or 10, **characterized in that** Pt complex compounds and Rh complex compounds are employed in a proportion by mass to one another of from 1:10 to 5:1.

12. A process according to at least one of claims 5 to 11, **characterized in that** the reaction is carried out in the presence of an inert hydrocarbon.

13. A process according to claim 12, **characterized in that** the reaction is carried out in toluene, xylene or n-decane.

14. A process for preparing an Si-containing compound of the general formulae II or III or a mixture comprising Si-containing compounds of the general formulae I, II and/or III, according to at least one of claims 1 to 13, **characterized in that** at least one N-[ω-(methyl), ω-(silyl)]alkyl-N-organocarboxamide of the general formula I 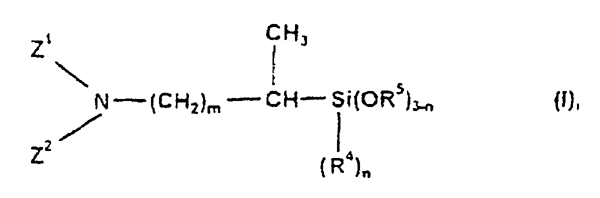 in which Z¹, Z², R¹, R², R³, R⁴, R⁵, m and n are as defined above for formula I,
is subjected to controlled hydrolysis in water or an alcohol/water mixture
in which alcohol and water are present in a proportion by mass to one another of from 1:100 to 100:1 and the water or the alcohol/water mixture is adjusted to a pH < 7 by addition of an inorganic or organic acid or of an acidic salt or to a pH > 7 by addition of a base or of a basic salt,
and the compound(s) of formula I and water are employed in a proportion by mass to one another of from 0.1:99.9 to 99.99:0.01.

15. A process according to claim 14, **characterized in that** the pH is adjusted using hydrogen chloride, formic acid, acetic acid, citric acid, sodium hydroxide solution, sodium formate or sodium acetate.

16. A process according to claim 14 or 15, **characterized in that** the pH of the water or alcohol/water mixture is adjusted to a value of ≥ 2 and ≤ 6 and the hydrolysis is conducted in the pH range of ≥ 2 and ≤ 6.

17. A process according to at least one of claims 14 to 16, **characterized in that** the compound (s) of formula I and water are employed in a proportion by mass to one another of from 10:90 to 99.9:0.1.

18. A process according to at least one of claims 14 to 17, **characterized in that** an alcohol or an alcohol mixture is used where at least one of the alcohols corresponds to at least one alkoxy group of the compound of formula I employed.

19. A process according to at least one of claims 14 to 18, **characterized in that** methanol, ethanol, propanol, butanol, 2-methoxyethanol, 2-ethylhexanol or a mixture thereof is employed as alcohol.

20. The use of a monomeric, oligomeric or polycondensed Si-containing compound or a mixture thereof according to any of claims 1 to 19 as an adhesion promoter between inorganic and/or organic substances.

21. The use of a monomeric, oligomeric or polycondensed Si-containing compound or a mixture thereof according to any of claims 1 to 19 to produce scratch-resistant and elastic coatings for the surface modification of inorganic or organic substances.

## Revendications

1. N[ω(méthyl), ω(Silyl]alkyl-N-organocarboxamides de formule générale I, 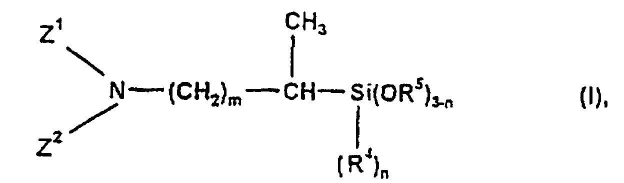 dans laquelle 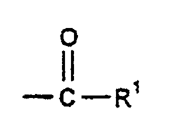
Z² égale à R² ou 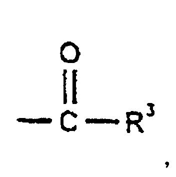 ou
Z¹ et Z² sont reliés par un pont en un cycle de formules suivantes : 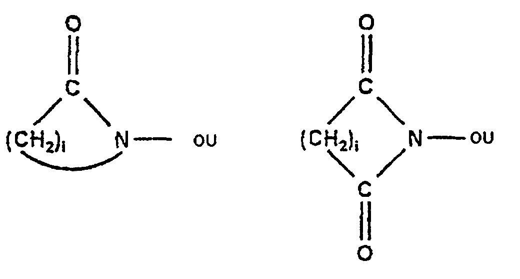 ou 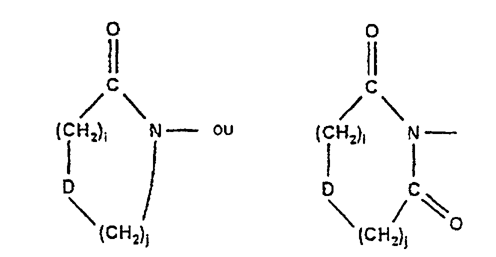 dans lesquels les D représente un groupe NH, O-, S-, SO- ou SO₂-, i ainsi que j sont identiques ou différents et représentent un valeur de nombre entier allant de 0 à 7,
et la taille des cycles dans le cycle total est ≤ 9,
R¹, R², R³, R⁴, R⁵ sont identiques ou différents et signifient respectivement un atome d'hydrogène ou un groupe alkyle linéaire, ramifié ou cyclique ayant de 1 à 8 atomes de carbone ou un groupe aryle ayant de 6 à 10 atomes de carbone et R⁵ peut représenter aussi bien un atome d'hydrogène qu'un groupe alkyle linéaire, ramifié ou cyclique ayant de 1 à 8 atomes de carbone ou un groupe aryle ayant de 6 à 10 atomes de carbone,
m représente un nombre entier allant de 0 à 16 et
n un nombre entier allant de 0 à 3,
à l'exception des composés non cycliques conformément à la formule I avec m égal à 1 et de la N-1(triéthoxysilyl)éthylpyrrolidone-2.

2. Composés contenant du silicium oligomères de formule générale II, 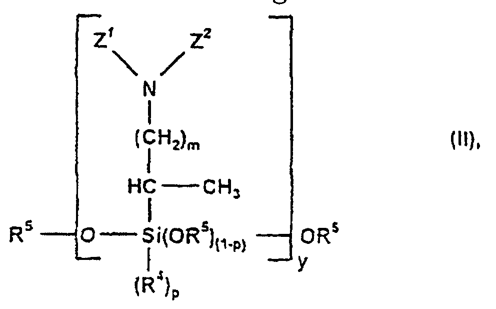 dans laquelle
Z¹ représente 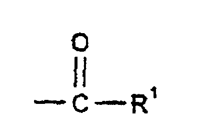
Z² est égal à R² ou 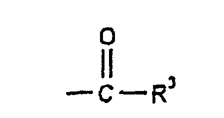
Z¹ et Z² sont reliés par un pont en un cycle de formules suivantes : 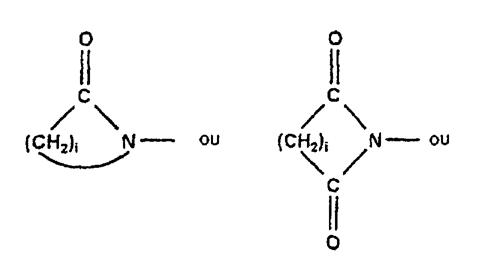 ou 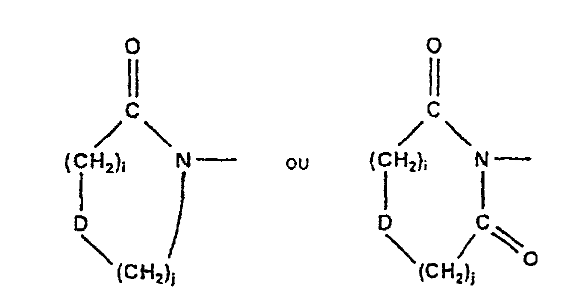 dans lesquels les D représente un groupe NH, O-, SO-, ou SO₂, i ainsi que j sont identiques ou différents et représentent un valeur de nombre entier allant de 0 à 7,
et la taille des cycles dans le cycle total est ≤ 9,
R¹, R², R³, R⁴, R⁵ sont identiques ou différents et signifient respectivement un atome d'hydrogène ou un groupe alkyle linéaire, ramifié ou cyclique ayant de 1 à 8 atomes de carbone ou un groupe aryle ayant de 6 à 10 atomes de carbone et R⁵ peut représenter aussi bien un atome d'hydrogéne qu'un groupe alkyle linéaire, ramifié ou cyclique ayant de 1 à 8 atomes de carbone ou un groupe aryle ayant de 6 à 10 atomes de carbone,
m prend une valeur de nombre entier allant de 0 à 16,
p une valeur de nombre entier allant de 0 à 1, et
y une valeur de nombre entier allant de 2 à 50,
et des composés contenant du silicium polycodensés de formule générale III 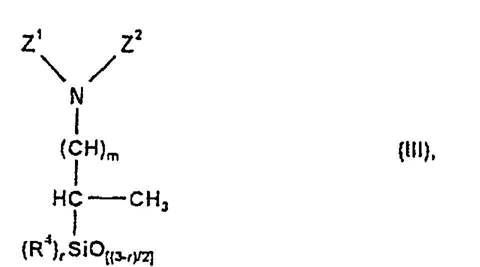 dans laquelle
Z¹ représente 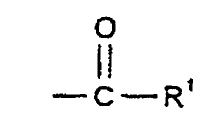
Z² égal à R² ou 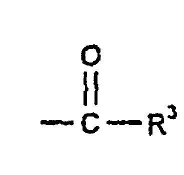 ou
Z¹ et Z² sont reliés par un pont en un cycle de formules suivantes : 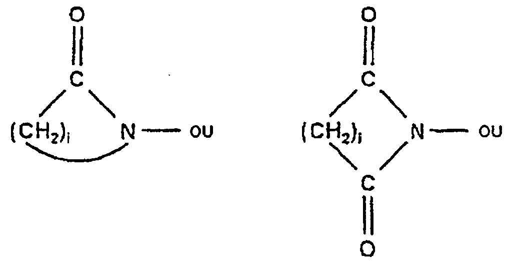 ou 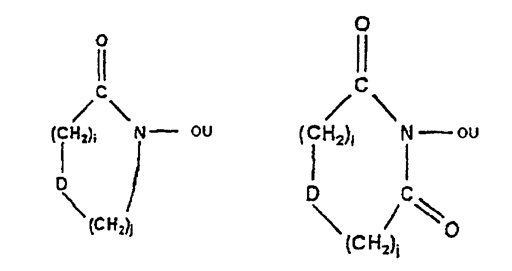 dans lesquels les D représente un groupe NH, O-, S-, SO- ou SO₂-, i ainsi que j sont identiques ou différents et représentent un valeur de nombre entier allant de 0 à 7,
et la taille des cycles dans le cycle total est ≤ 9,
R¹, R², R³, et R⁴ sont identiques ou différents et signifient respectivement un atome d'hydrogène ou un groupe alkyle linéaire, ramifié ou cyclique ayant de 1 à 8 atomes de carbone ou un groupe aryle ayant de 6 à 10 atomes de carbone
m prend une valeur de nombre entier allant de 0 à 16 et
r une valeur de nombre entier allant de 0 à 1, à l'exclusion en ce qui concerne Z¹ et Z², des composés non cycliques conformément à la formule III avec m égal à 1.

3. N[ω(méthyl), ω(Silyl]alkyl-N-organocarboxamides de formule générale I, 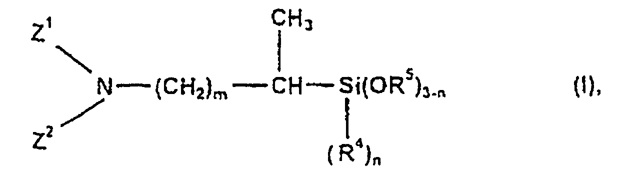 dans laquelle
Z¹ représente 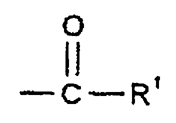
Z² est identique à R² ou 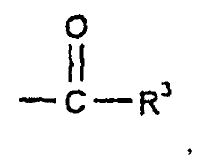 ou
Z¹ et Z² sont reliés par un pont en un cycle de formules suivantes : 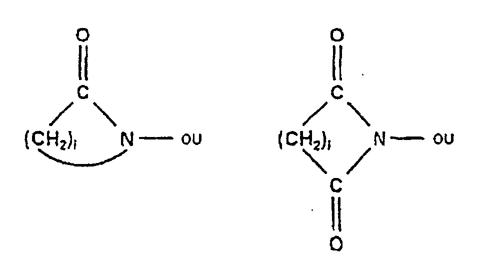 ou 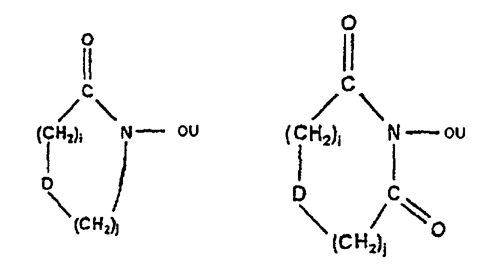 dans lesquelles D représente un groupe NH, O-, S-, SO- ou SO₂-,
i ainsi que j sont identiques ou différents et représentent un valeur de nombre entier allant de 0 à 7,
et la taille des cycles dans le cycle total est ≤ 9,
R¹, R², R³, R⁴, et R⁵ sont identiques ou différents et signifient respectivement un atome d'hydrogène ou un groupe alkyle linéaire, ramifié ou cyclique ayant de 1 à 8 atomes de carbone ou un groupe aryle ayant de 6 à 10 atomes de carbone et R⁵ peut représenter aussi bien un atome d'hydrogène qu'un groupe alkyle linéaire, ramifié ou cyclique ayant de 1 à 8 atomes de carbone ou un groupe aryle ayant de 6 à 10 atomes de carbone, et
m représente une valeur de nombre entier allant de 0 à 16 et
n représente une valeur de nombre entier allant de 0 à 3,
accessibles par réaction d'un ω-alkylènecarboxamide de formule générale IV 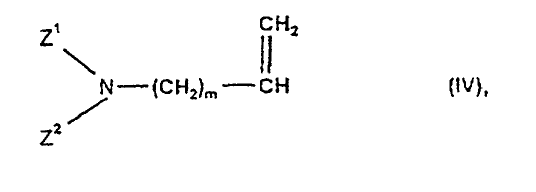 dans laquelle Z¹, Z², R¹, R², R³ et m ont les significations mentionnées ci-dessus pour la formule I,
avec un hydrogénosilane de formule générale V, 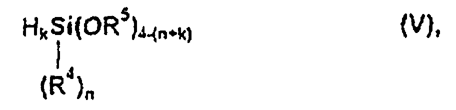 dans laquelle R⁴ et R⁵ ont les significations mentionnées ci-dessus pour la formule I et n est une valeur de nombre entier de 0, 1, 2 ou 3,
k est une valeur de nombre entier de 1, 2, 3 ou 4, et
(n+k) ≤ 4,
en présence de rhodium métallique sur un support à base de charbon activé, (Ph₃P)₃Rh (CO)H, (Ph₃P)₃RhCl ou [Rh(Cyclooctadiène-1,5)Cl]₂ ou un mélange qui contient au moins un des composés de complexe du rhodium mentionné précédemment et au moins un composé de complexe du platine, comme catalyseur et traitement du mélange de produits obtenu.

4. Composés oligomères contenant du silicium de formule générale II, 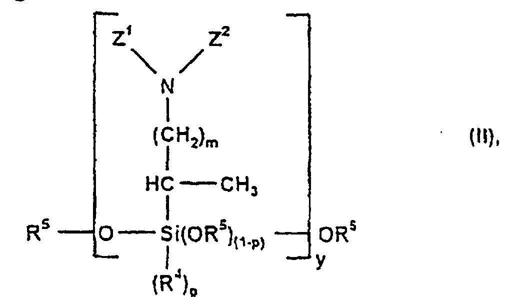 dans laquelle
Z¹ représente 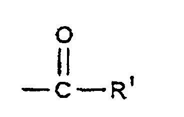
Z² est identique à R² ou est 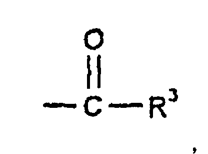 ou
Z¹ et Z² sont reliés par un pont en un cycle de formules suivantes : 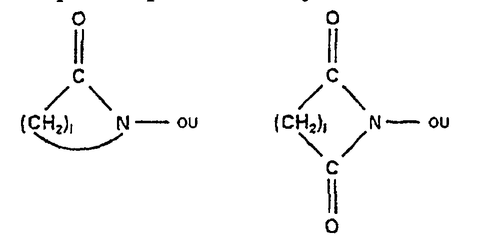 ou 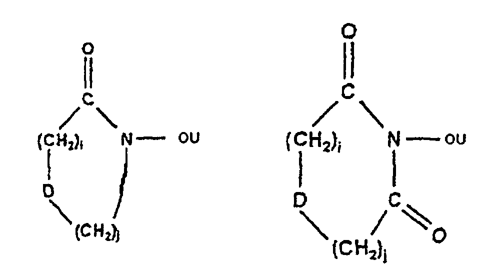 dans lesquelles D représente un groupe NH, O-, S-, SO- ou SO₂-,
i ainsi que j sont identiques ou différents et représentent un valeur de nombre entier allant de 0 à 7,
et la taille des cycles dans le cycle total est ≤ 9,
R¹, R², R³, R⁴, et R⁵ sont identiques ou différents et signifient respectivement un atome d'hydrogène ou un groupe alkyle linéaire, ramifié ou cyclique ayant de 1 à 8 atomes de carbone ou un groupe aryle ayant de 6 à 10 atomes de carbone et R⁵ peut représenter aussi bien un atome d'hydrogène qu'un groupe alkyle linéaire, ramifié ou cyclique ayant de 1 à 8 atomes de carbone ou un groupe aryle ayant de 6 à 10 atomes de carbone, et
m prend une valeur de nombre entier allant de 0 à 16 et
p prend une valeur de nombre entier allant de 0 à 1,
y prend une valeur de nombre entier allant de 2 à 50, ainsi que des composés contenant du silicium polycondensés de formule générale III, 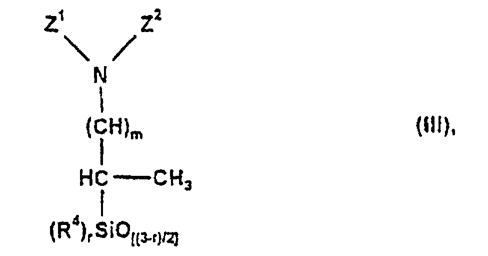 dans laquelle
Z¹ représente 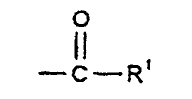
Z² est identique à R² ou 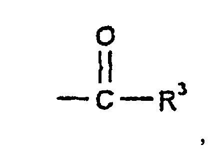 ou
Z¹ et Z² sont reliés par un pont en un cycle de formules suivantes : 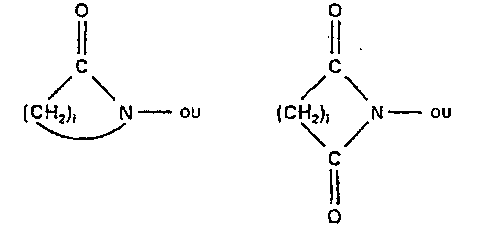 ou 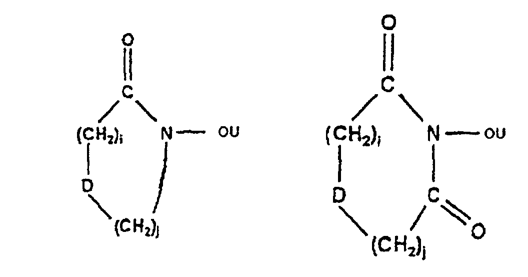 dans lesquelles D représente un groupe NH, O-, S-, SO- ou SO₂-,
i ainsi que j sont identiques ou différents et représentent un valeur de nombre entier allant de 0 à 7,
et la taille des cycles dans le cycle total est ≤ 9,
R¹, R², R³, et R⁴ sont identiques ou différents et signifient respectivement un atome d'hydrogène ou un groupe alkyle linéaire, ramifié ou cyclique ayant de 1 à 8 atomes de carbone ou un groupe aryle ayant de 6 à 10 atomes de carbone, m prend une valeur de nombre entier allant de 0 à 16, et
r prend une valeur de nombre entier de 0 ou 1,
ou des mélanges qui renferment des composés contenant du silicium de formules générales I, II et/ou III,
accessible par hydrolyse contrôlée d'au moins un N[ω(méthyl), ω(Silyl]alkyl-N-organocarboxamides de formule générale I, 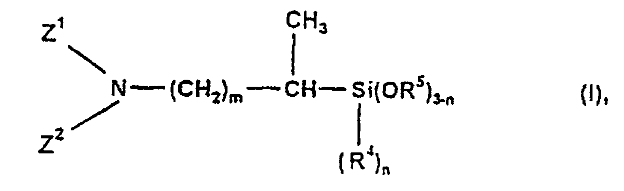 dans laquelle
Z¹ représente 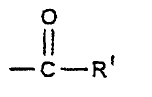
Z² est identique à R² ou 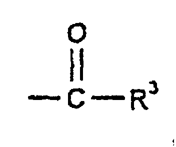 ou
Z¹ et Z² sont reliés par un pont en un cycle de formules suivantes : 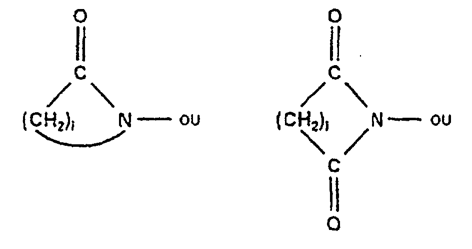 ou 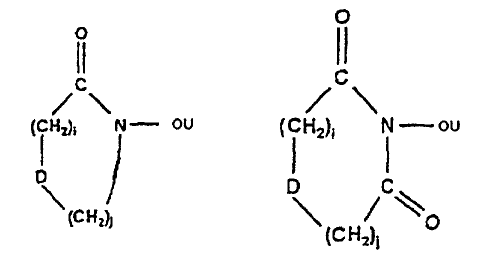 dans lesquels les D représente un groupe NH, O-, S-, SO- ou SO₂-,
i ainsi que j sont identiques ou différents et représentent un valeur de nombre entier allant de 0 à 7,
et la taille des cycles dans le cycle total est ≤ 9,
R¹, R², R³, R⁴, R⁵ sont identiques ou différents et signifient respectivement un atome d'hydrogène ou un groupe alkyle linéaire, ramifié ou cyclique ayant de 1 à 8 atomes de carbone ou un groupe aryle ayant de 6 à 10 atomes de carbone et R⁵ peut représenter aussi bien un atome d'hydrogène qu'un groupe alkyle linéaire, ramifié ou cyclique ayant de 1 à 8 atomes de carbone ou un groupe aryle ayant de 6 à 10 atomes de carbone,
m représente une valeur de nombre entier allant de 0 à 16 et
n représente une valeur de nombre entier allant de 0 à 3,
dans l'eau ou un mélange alcool/eau dans lequel l'alcool : eau se présentent dans un rapport en masse de 1 : 100 à 100 : 1 et l'eau ou le mélange alcool/eau est ajusté à une valeur de pH < 7 par addition d'un acide minéral ou organique ou d'un sel acide ou bien à une valeur de pH > 7 par addition d'une base ou d'un sel basique,
dans lequel le(s) composé(s) conformément à la formule I son mis en oeuvre avec l'eau dans un rapport en masse de 0,1 : 99,9 à 99,99 : 0,01.

5. Procédé de préparation de N[ω(méthyl), ω(Silyl]alkyl-N-organocarboxamides de formule générale I selon l'une quelconque des revendications 1 ou 3,
à l'aide d'une réaction d'hydrosilylation en présence d'un catalyseur contenant du rhodium,
**caractérisé en ce qu'**
on fait réagir un ω-alkylènecarboxamides de formule générale IV, 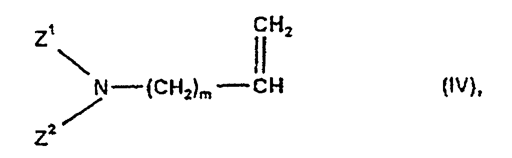 dans laquelle Z¹, Z², R¹, R², R³ et m ont les significations mentionnées ci-dessus pour la formule I,
avec un hydrogénosilane de formule générale (V), 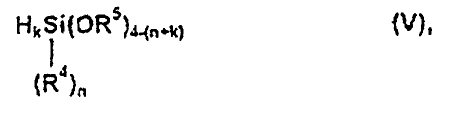 dans laquelle R⁴, R⁵, n k, et (n+k) ont les significations mentionnées pour la formule V précédemment,
en présence de rhodium métallique sur un support à base de charbon activé, (Ph₃P)₃Rh (CO)H, (Ph₃P)₃RhCl ou [Rh(Cyclooctadiène-1,5)Cl]₂ ou un mélange qui renferme au moins un des composés de complexe du rhodium mentionné précédemment et au moins un composé de complexe du Pt, en tant que catalyseur, et on traite le mélange de produits obtenu.

6. Procédé selon la revendication 5,
**caractérisé en ce qu'**
on met en oeuvre le catalyseur avec l'ω-alkylènecarboxamide conformément à la formule IV dans un rapport en masse allant de 1 : 1000 à 1 : 100.000.

7. Procédé selon la revendication 6,
**caractérisé en ce qu'**
on met en oeuvre le catalyseur avec 1'ω-alkylènecarboxamide conformément à la formule IV dans un rapport en masse allant de 1 : 3000 à 1 : 50.000.

8. Procédé selon la revendication 7,
**caractérisé en ce qu'**
on met en oeuvre le catalyseur avec 1'ω-alkylcarboxamide conformément à la formule IV dans un rapport en masse allant de 1 : 5000 à 1 : 30.000.

9. Procédé selon au moins l'une quelconque des revendications 5 à 8,
**caractérisé en ce qu'**
on met en oeuvre (Ph₃P)₂PtCl₂, (Ph₃P)₄Pt ou des complexes du Pt à base d'acide hexachloroplatinique avec au moins un des composés de complexe de rhodium cités en tant que catalyseur.

10. Procédé selon la revendication 9,
**caractérisé en ce qu'**
on met en oeuvre des composés de complexe de platine à base d'acide hexachloroplatinique sous forme de complexes avec l'acétone, la cyclohexanone ou l'i-propanol.

11. Procédé selon la revendication 9 ou la revendication 10,
**caractérisé en ce qu'**
on met en oeuvre des composés de complexe du Pt avec les complexes du Rh dans un rapport en masse allant de 1 : 10 à 5 : 1.

12. Procédé selon l'une quelconque des revendications 5 à 11,
**caractérisé en ce qu'**
on effectue la réaction en présence d'un hydrocarbure inerte.

13. Procédé selon la revendication 12,
**caractérisé en ce qu'**
on effectue la réaction dans le toluène, le xylène ou le n-decane.

14. Procédé de préparation de composés contenant du silicium de formules générales II ou III ou d'un mélange qui renferme les composés contenant du Si de formules générales I, II et/ou III selon au moins l'une quelconque des revendications 1 à 13,
**caractérisé en ce qu'**
on hydrolyse d'une manière contrôlée au moins un N[ω(méthyl), ω(Silyl]alkyl-N-organocarboxamide de formule générale I, 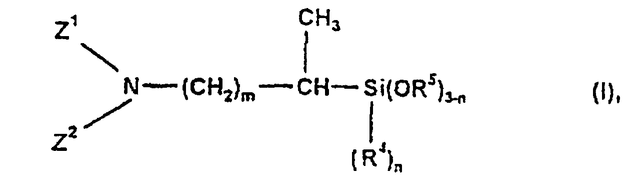 dans laquelle Z¹, Z², R¹, R², R³, R⁴, R⁵, m et n ont les significations mentionnées ci-dessus pour la formule I,
dans de l'eau ou un mélange alcool/eau, dans lequel l'alcool/eau se présentent dans un rapport en masse allant de 1 : 100 à 100 : 1, et dans lequel on ajuste l'eau ou le mélange alcool/eau à une valeur de pH < 7 par addition d'un acide minéral ou organique ou d'un sel acide, ou à une valeur de pH > 7 par addition d'une base ou d'un sel basique et, le(s) composé(s) est (sont) mis en oeuvre dans un rapport en masse allant de 0,1 : 99,9 à 99,99 : 0,01.

15. Procédé selon la revendication 14,
**caractérisé en ce qu'**
on utilise pour l'ajustement du pH de l'acide chlorhydrique, de l'acide formique, de l'acide acétique, de l'acide citrique, de la lessive de soude, du formiate de sodium ou de l'acétate de sodium.

16. Procédé selon la revendication 14 ou la revendication 15,
**caractérisé en ce qu'**
on ajuste la valeur du pH de l'eau ou du mélange alcool/eau à une valeur de ≥ 2 et ≤ 6 et on effectue l'hydrolyse dans une zone de pH ≥ 2 et ≤ 6.

17. Procédé selon au moins l'une quelconque des revendications 14 à 16,
**caractérisé en ce qu'**
on met en oeuvre le(s) composé(s) conformément à la formule I avec l'eau dans un rapport en masse de 10 : 90 à 99,9 : 0,1.

18. Procédé selon au moins l'une quelconque des revendications 14 à 17,
**caractérisé en ce qu'**
on utilise un alcool ou un mélange d'alcools dans lequel au moins un des alcools correspond à au moins un des groupes alkoxy du composé mis en oeuvre conformément à la formule I.

19. Procédé selon au moins l'une quelconque des revendications 14 à 18,
**caractérisé en ce qu'**
on met en oeuvre comme alcool du méthanol, de l'éthanol, du propanol, du butanol, du 2-méthoxyéthanol, du 2-éthylhexanol ou leurs mélanges.

20. Utilisation des composés contenant du silicium monomères, oligomères ou polycondensés ou leurs mélanges selon les revendications 1 à 19 en tant qu'adjuvant d'adhésion entre des substances minérales et/ou organiques.

21. Utilisation des composés contenant du silicium monomères, oligomères ou polycondensés ou leurs mélanges selon les revendications 1 à 19 en vue de la préparation de revêtements résistants aux rayures et
